# EUROPEAN PATENT APPLICATION

(11) **EP 4 636 303 A1**
(43) Date of publication of application: **22.10.2025**
(21) Application number: 23903470.5
(22) Date of filing: 11.12.2023
(51) Int. Cl.: F21S 43/27, F21S 43/14, F21S 43/20, F21V 5/08, F21V 9/00, F21V 17/00, F21V 17/10, G02B 5/00, G02B 13/00, F21W 103/60, F21Y 115/10

(54) **VEHICLE LAMP**

(30) Priority: 12.12.2022 JP 2022198068; 14.12.2022 JP 2022199421; 30.01.2023 JP 2023011920
(71) Applicant: Ichikoh Industries, Ltd., Isehara-shi, Kanagawa 259-1192 (JP)
(72) Inventor: OKUBO, Yasuhiro, Isehara-shi, Kanagawa 259-1192 (JP); ABE, Toshiya, Isehara-shi, Kanagawa 259-1192 (JP)
(74) Representative: Lewis Silkin LLP
(86) International application number: PCT/JP2023/044206
(87) International publication number: WO 2024/128184

(57) **Abstract**

A vehicle lamp includes a light source, a light source-side lens, a meta-surface portion, a light-blocking member including a slit, and a projecting lens. The meta-surface portion includes a plurality of pillar portions provided at a predetermined pitch in a first direction parallel to the longitudinal direction of the slit and in a second direction perpendicular to the first direction with a reference position corresponding to an optical axis of the light source-side lens as a center. The meta-surface portion includes a central region that includes the reference position and includes a portion where the diameters of the pillar portions gradually decrease as a distance from the reference position increases. **In** the central region, changes in the diameters of the pillar portions are more gradual on one side in the first direction with respect to the reference position than on the other side in the first direction.

## Description

### TECHNICAL FIELD

The present disclosure relates to a vehicle lamp.

### BACKGROUND ART

There is a known vehicle lamp capable of emitting a pattern onto a road surface (for example, see PTL 1).

Further, there is a known configuration of a vehicle lamp including what is called a meta-lens as a condensing lens that condenses light from a light source (for example, see PTL 2). Further, there is a known vehicle lamp including a light source-side lens that condenses light from a light source, a shade that blocks a part of the light condensed by the light source-side lens, and a projecting lens that projects the light via the shade to the front side of the vehicle. In such a vehicle lamp, the configuration including what is called a meta-lens is known as a light source-side lens (for example, see PTL 2). The meta-lens has, for example, a plate shape and includes a meta-surface portion that changes the wavefront of the light from the light source.

### CITATION LIST

### PATENT LITERATURE

PTL 1: Japanese Unexamined Patent Application Publication No. 2021-111465
PTL 2: International Publication No. 2022/025031

### SUMMARY OF THE INVENTION

### PROBLEMS TO BE SOLVED BY THE INVENTION

The vehicle lamp described in PTL 1 has a configuration in which light from a light source is condensed by a condensing lens toward a slit of a light-blocking member, and the light having passed through the slit is emitted by a projecting lens onto a road surface. In this configuration, a convex lens is used as the condensing lens. Therefore, the emission surface of the convex lens needs to be located on the light-blocking member side by the thickness of the convex lens, and it is necessary to increase the converging angle toward the slit. When the converging angle of the condensing lens is increased, the light having passed through the slit is incident on the outer peripheral side of the projecting lens, and thus the light is easily affected by aberration of the projecting lens. In this case, the appearance of the pattern may be degraded, for example, the edge portion of the pattern formed on the road surface may be blurred or color fringes may occur.

In the vehicle lamp described in PTL 2, in a case where light is incident on a portion of the condensing lens other than a meta-surface portion, the light may become stray light when the light is emitted from the condensing lens.

Further, in the vehicle lamp described in PTL 2, a shade is handled as a single component. With this configuration, in the case of assembly, it is necessary to accurately perform alignment between a light source-side lens and the shade, which causes a large burden.

The present disclosure has been made in view of the above and has an object to provide a vehicle lamp capable of suppressing deterioration of the appearance of a pattern emitted onto a road surface, a vehicle lamp capable of suppressing incidence of light on a portion of a condensing lens other than a meta-surface portion, and a vehicle lamp capable of reducing a burden at the time of assembly.

### MEANS FOR SOLVING THE PROBLEM

A vehicle lamp according to a first aspect of the present invention includes a light source that emits light, a light source-side lens that has a plate shape, includes a meta-surface portion that converts a wavefront of the light from the light source, and emits the light with a converted wavefront, a light-blocking member including a slit that allows a part of the light emitted from the light source-side lens to pass through, and a projecting lens that irradiates a road surface with the light having passed through the slit to form an irradiation pattern, the slit is formed to have its longitudinal direction in one direction, the meta-surface portion includes a plurality of pillar portions that is provided at a predetermined pitch in a first direction parallel to the longitudinal direction of the slit and in a second direction perpendicular to the first direction with a reference position corresponding to an optical axis of the light source-side lens as a center, the meta-surface portion includes a central region that includes the reference position and includes a portion where diameters of the pillar portions gradually decrease as a distance from the reference position increases, and in the central region, changes in the diameters of the pillar portions are more gradual on one side in the first direction with respect to the reference position than on the other side in the first direction.

A second aspect of the present invention is the vehicle lamp according to the first aspect and, in the central region of the meta-surface portion, changes in the diameters of the pillar portions from the reference position are the same on one side in the second direction and on the other side in the second direction.

A third aspect of the present invention is the vehicle lamp according to the first aspect or the second aspect and, in the central region of the meta-surface portion, changes in the diameters of the pillar portions on one side in the first direction from the reference position are more gradual than changes in the diameters of the pillar portions on one side or the other side in the second direction from the reference position.

A fourth aspect of the present invention is the vehicle lamp according to any one of the first aspect to the third aspect and, in the central region of the meta-surface portion, changes in the diameters of the pillar portions on the other side in the first direction from the reference position are more rapid than changes in the diameters of the pillar portions on one side or the other side in the second direction from the reference position.

A fifth aspect of the present invention is the vehicle lamp according to any one of the first aspect to the fourth aspect and, in the central region of the meta-surface portion, a peak position where the diameter of the pillar portion becomes the largest in the first direction is provided on one side with respect to the reference position.

A sixth aspect of the present invention is the vehicle lamp according to any one of the first aspect to the fifth aspect and, in the central region, the number of the pillar portions in the first direction with reference to the reference position is larger than the number of the pillar portions in the second direction.

A seventh aspect of the present invention is the vehicle lamp according to any one of the first aspect to the sixth aspect and, in the central region, the number of the pillar portions provided on one side in the first direction from the reference position is larger by 20% or more than the number of the pillar portions provided on each of one side and the other side in the second direction from the reference position, and the number of the pillar portions provided on the other side in the first direction from the reference position is smaller by 10% or more than the number of the pillar portions provided on each of one side and the other side in the second direction from the reference position.

An eighth aspect of the present invention is the vehicle lamp according to any one of the first aspect to the seventh aspect and, in the meta-surface portion, a phase distribution is set such that phases periodically change in a radial direction along an incidence surface from a central portion including the reference position, the central region is a region corresponding to a first period of the phase distribution including the reference position, the meta-surface portion includes peripheral regions that are provided in an annular shape to surround the central region and that correspond to second and subsequent periods of the phase distribution, and the peripheral regions are formed such that diameters of the pillar portions gradually decrease as a distance from the central region increases along the incidence surface.

A ninth aspect of the present invention is the vehicle lamp according to the eighth aspect, the peripheral regions are in multiple layers provided in a direction outward away from the central region, and the number of peak positions where the diameter of the pillar portion becomes the largest is larger on the other side than on one side in the first direction.

A vehicle lamp according to a tenth aspect of the present invention includes a light source that emits light, a condensing lens that condenses the light emitted from the light source, and a projecting lens that emits the light condensed by the condensing lens to form an irradiation pattern, the condensing lens has a flat plate shape having an incidence surface on which light is incident from the light source and an emission surface from which the light incident from the incidence surface is emitted and has, on the incidence surface, a meta-surface portion that converts a wavefront of the light from the light source into a curved wavefront in a converging direction, and the vehicle lamp further includes a stray-light suppression portion that blocks the light incident on a portion of the condensing lens other than the meta-surface portion.

An eleventh aspect of the present invention is the vehicle lamp according to the tenth aspect, and the stray-light suppression portion is provided in the condensing lens.

A twelfth aspect of the present invention is the vehicle lamp according to the tenth aspect or the eleventh aspect, and the stray-light suppression portion is provided around the meta-surface portion on the incidence surface of the condensing lens.

A thirteenth aspect of the present invention is the vehicle lamp according to any one of the tenth aspect to the twelfth aspect, the vehicle lamp further includes a light source substrate on which the light source is mounted, and a frame member that is fixed to the light source substrate and supports the condensing lens, the condensing lens is joined to the frame member via a joining layer, and the stray-light suppression portion includes at least a part of the joining layer.

A fourteenth aspect of the present invention is the vehicle lamp according to any one of the tenth aspect to the thirteenth aspect, the vehicle lamp further includes a cover member that supports the incidence surface of the condensing lens, covers the meta-surface portion, and allows light from the light source to pass through to the meta-surface portion side, and a spacer provided between the cover member and the incidence surface, and the stray-light suppression portion is provided in the spacer.

A fifteenth aspect of the present invention is the vehicle lamp according to any one of the tenth aspect to the fourteenth aspect, the vehicle lamp further includes a light-blocking member including a slit that allows a part of the light condensed by the condensing lens to pass through, the projecting lens irradiates a road surface with the light having passed through the slit to form the irradiation pattern, and the stray-light suppression portion is provided between the light source and the light-blocking member.

A vehicle lamp according to a sixteenth aspect of the present invention includes a light source that emits light, a light source-side lens that includes an incidence surface on which light is incident from the light source, a meta-surface portion that is provided on the incidence surface and converts a wavefront of the light, an emission surface that emits the light with a converted wavefront, and a light-blocking portion that is provided on the emission surface and includes a slit that allows a part of the light to pass through, and a projecting lens that emits the light having passed through the slit in the light source-side lens to form an irradiation pattern.

A seventeenth aspect of the present invention is the vehicle lamp according to the sixteenth aspect, and the light-blocking portion is formed in a thin film shape using a metallic material.

An eighteenth aspect of the present invention is the vehicle lamp according to the sixteenth aspect or the seventeenth aspect, and the light-blocking portion has a first opening forming the slit.

A nineteenth aspect of the present invention is the vehicle lamp according to any one of the sixteenth aspect to the eighteenth aspect, the vehicle lamp further includes a light source substrate on which the light source is mounted, and a frame member fixed to the light source substrate, the light source-side lens is supported by the frame member, and a positioning portion is provided in at least either the light source-side lens or the frame member.

A twentieth aspect of the present invention is the vehicle lamp according to the nineteenth aspect, and the light-blocking portion has a second opening corresponding to the positioning portion.

A twenty-first aspect of the present invention is the vehicle lamp according to the nineteenth aspect, the light source substrate has a mounting surface on which the light source is mounted, the frame member is fixed to the mounting surface, and the vehicle lamp further includes a connector that is provided on a surface opposite to the mounting surface of the light source substrate and is connected to the outside.

A twenty-second aspect of the present invention is the vehicle lamp according to any one of the sixteenth aspect to the twenty-first aspect, and the number of the light source provided is one.

A twenty-third aspect of the present invention is the vehicle lamp according to any one of the sixteenth aspect to the twenty-second aspect, and the meta-surface portion has a dimension in a lateral direction of the slit larger than a dimension of the slit and has a dimension in a longitudinal direction of the slit smaller than a dimension of the slit.

### EFFECT OF THE INVENTION

According to the present disclosure, it is possible to provide a vehicle lamp capable of suppressing deterioration of the appearance of a pattern emitted onto a road surface, a vehicle lamp capable of suppressing incidence of light on a portion of a condensing lens other than a meta-surface portion, and a vehicle lamp capable of reducing a burden at the time of assembly.

### BRIEF DESCRIPTION OF THE DRAWINGS

[FIG. 1] FIG. 1 is an exploded perspective view illustrating an example of a vehicle lamp according to a first embodiment.
[FIG. 2] FIG. 2 is a diagram illustrating a state of the vehicle lamp when viewed from the front.
[FIG. 3] FIG. 3 is a diagram illustrating an example of a light source-side lens.
[FIG. 4] FIG. 4 is a diagram illustrating an example of a phase distribution in a meta-surface portion.
[FIG. 5] FIG. 5 is a diagram illustrating an example of the meta-surface portion when viewed from an axial direction of an optical axis.
[FIG. 6] FIG. 6 is a graph illustrating changes in the diameters of pillar portions in the meta-surface portion illustrated in FIG. 5.
[FIG. 7] FIG. 7 is a diagram illustrating an example of an operation of the vehicle lamp according to the first embodiment.
[FIG. 8] FIG. 8 is a diagram illustrating an example of an operation of the vehicle lamp according to the first embodiment.
[FIG. 9] FIG. 9 is a diagram illustrating an example of an irradiation pattern formed on a road surface by the vehicle lamp.
[FIG. 10] FIG. 10 is a perspective view illustrating an example of the vehicle lamp according to a second embodiment.
[FIG. 11] FIG. 11 is an exploded perspective view illustrating an example of the vehicle lamp according to the second embodiment.
[FIG. 12] FIG. 12 is a diagram illustrating a state of the vehicle lamp when viewed from the axial direction of the optical axis.
[FIG. 13] FIG. 13 is a diagram illustrating an example of a condensing lens.
[FIG. 14] FIG. 14 is a diagram illustrating an example of an operation of the vehicle lamp according to the second embodiment.
[FIG. 15] FIG. 15 is a diagram illustrating an example of an irradiation pattern formed on a road surface by the vehicle lamp.
[FIG. 16] FIG. 16 is a diagram illustrating a configuration of a fixing portion of a light source unit, the condensing lens, and a frame member in the vehicle lamp according to the second embodiment.
[FIG. 17] FIG. 17 is a diagram illustrating a configuration of the fixing portion of the light source unit, the condensing lens, and the frame member in the vehicle lamp according to the second embodiment.
[FIG. 18] FIG. 18 is a diagram illustrating a configuration of the fixing portion of the light source unit, the condensing lens, and the frame member in the vehicle lamp according to the second embodiment.
[FIG. 19] FIG. 19 is a diagram illustrating a configuration of the fixing portion of the light source unit, the condensing lens, and the frame member in the vehicle lamp according to the second embodiment.
[FIG. 20] FIG. 20 is a perspective view illustrating an example of a condensing lens.
[FIG. 21] FIG. 21 is a perspective view illustrating an example of a condensing lens.
[FIG. 22] FIG. 22 is a perspective view illustrating an example of a condensing lens.
[FIG. 23] FIG. 23 is a perspective view illustrating an example of a condensing lens.
[FIG. 24] FIG. 24 is a diagram illustrating a configuration of the fixing portion of the light source unit, the condensing lens, and the frame member in a vehicle lamp according to another example.
[FIG. 25] FIG. 25 is a diagram illustrating a configuration of the fixing portion of the light source unit, the condensing lens, and the frame member in the vehicle lamp according to another example.
[FIG. 26] FIG. 26 is a diagram illustrating a configuration of the fixing portion of the light source unit, the condensing lens, and the frame member in the vehicle lamp according to another example.
[FIG. 27] FIG. 27 is a diagram illustrating a configuration of the fixing portion of the light source unit, the condensing lens, and the frame member in the vehicle lamp according to another example.
[FIG. 28] FIG. 28 is a diagram illustrating a configuration of a fixing portion of the light source unit, the condensing lens, and a frame member in a vehicle lamp according to another example.
[FIG. 29] FIG. 29 is a diagram illustrating a configuration of the fixing portion of the light source unit, the condensing lens, and the frame member in the vehicle lamp according to another example.
[FIG. 30] FIG. 30 is a diagram illustrating a configuration of a fixing portion of the light source unit, the condensing lens, and a frame member in a vehicle lamp according to another example.
[FIG. 31] FIG. 31 is a diagram illustrating a configuration of the fixing portion of the light source unit, the condensing lens, and the frame member in the vehicle lamp according to another example.
[FIG. 32] FIG. 32 is a perspective view illustrating a configuration of a condensing lens according to a modification.
[FIG. 33] FIG. 33 is a perspective view illustrating a configuration of a frame member according to a modification.
[FIG. 34] FIG. 34 is an exploded perspective view illustrating an example of a vehicle lamp according to a third embodiment.
[FIG. 35] FIG. 35 is an exploded perspective view illustrating an example of the vehicle lamp according to the third embodiment.
[FIG. 36] FIG. 36 is a diagram illustrating an example of a state in which the vehicle lamp according to the third embodiment is assembled.
[FIG. 37] FIG. 37 is a diagram illustrating an example of a state in which the vehicle lamp according to the third embodiment is assembled.
[FIG. 38] FIG. 38 is a diagram illustrating an example of a state in which the vehicle lamp according to the third embodiment is assembled.
[FIG. 39] FIG. 39 is a diagram illustrating an example of a light source-side lens according to the third embodiment.
[FIG. 40] FIG. 40 is a diagram illustrating an example of the light source-side lens according to the third embodiment.
[FIG. 41] FIG. 41 is a diagram illustrating an example of the light source-side lens according to the third embodiment.
[FIG. 42] FIG. 42 is a diagram illustrating an example of an operation of the vehicle lamp according to the third embodiment.
[FIG. 43] FIG. 43 is a diagram illustrating an example of an operation of the vehicle lamp according to the third embodiment.
[FIG. 44] FIG. 44 is a diagram illustrating an example of an irradiation pattern formed on a road surface by the vehicle lamp.

### MODE FOR CARRYING OUT THE INVENTION

### <First Embodiment>

A first embodiment of a vehicle lamp according to the present disclosure will be described below with reference to the drawings. The present invention is not limited to the embodiment. Further, components in the following embodiment include components that can be easily replaced by those skilled in the art or substantially the same components.

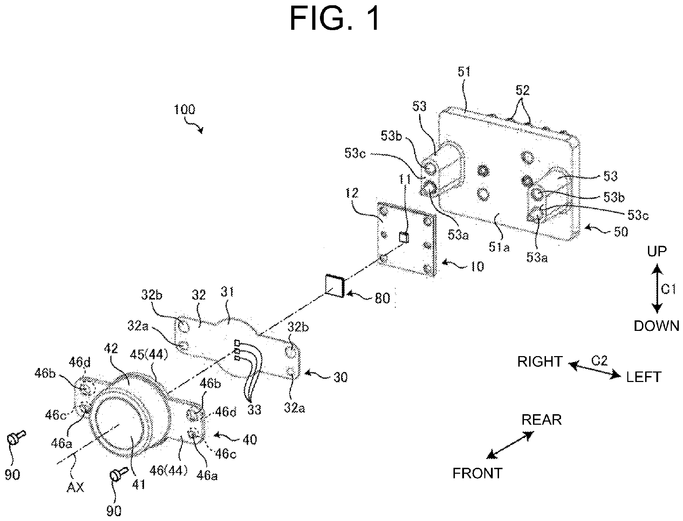

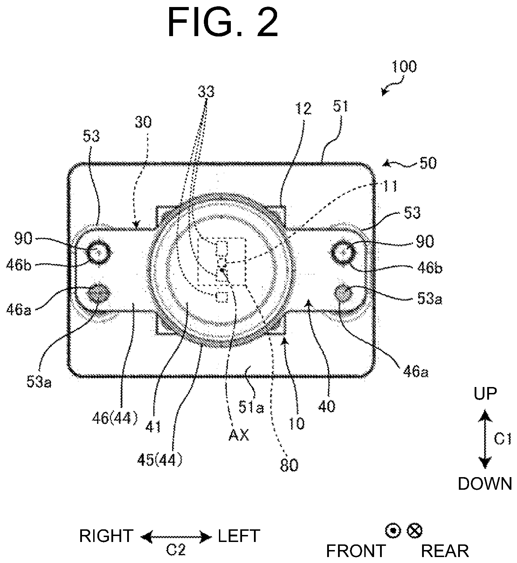

FIG. 1 is an exploded perspective view illustrating an example of a vehicle lamp 100 according to the first embodiment. FIG. 2 is a diagram illustrating a state of the vehicle lamp 100 when viewed from the front. As illustrated in FIGS. 1 and 2, the vehicle lamp 100 includes a light source unit 10, a light source-side lens 80, a light-blocking member 30, a projecting lens 40, and a support member 50.

The light source unit 10 includes a light source 11 and a substrate 12. The light source 11 is, for example, a semiconductor-type light source such as an LED. The light source 11 has a light emission surface 11a that emits light. The light emission surface 11a is provided to face an incidence surface 80a of the light source-side lens 80. The light source 11 emits light of a single color, e.g., orange (amber) light from the light emission surface 11a. For example, the one light source 11 is provided. The plurality of light sources 11 may be provided. Further, the color of light emitted from the light emission surface 11a is not limited to orange.

The light source 11 is mounted on the substrate 12. A wiring, a circuit, and the like, for transmitting signals to the light source 11 are formed on the substrate 12. The substrate 12 is fixed to a base portion 51 of the support member 50 described below.

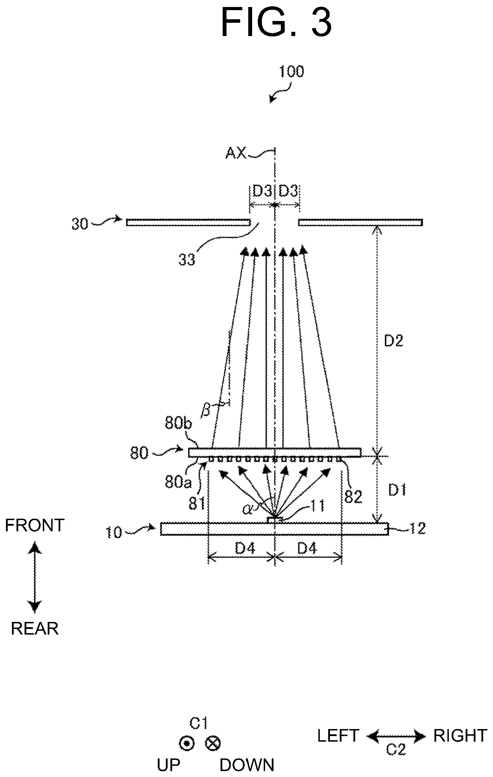

The light source-side lens 80 emits the light emitted from the light source 11 to the light-blocking member 30 side. The light source-side lens 80 is formed in a plate shape such as a flat plate shape by using a light-permeable material such as quartz glass. The light source-side lens 80 can be formed to have a thickness (dimension in the front-rear direction) of about 0. 1 mm to 1 mm. The light source-side lens 80 may be fixed to the substrate 12, or may be fixed to the base portion 51 of the support member 50 described below. FIG. 3 is a diagram illustrating an example of the light source-side lens 80. In addition to the light source-side lens 80, FIG. 3 also illustrates the light source unit 10 and the light-blocking member 30 described below.

As illustrated in FIG. 3, the light source-side lens 80 has the incidence surface 80a and an emission surface 80b. The incidence surface 80a and the emission surface 80b are, for example, planar. The incidence surface 80a and the emission surface 80b may be curved surfaces. The light source-side lens 80 is provided such that the incidence surface 80a faces the light source 11 and the emission surface 80b faces the light-blocking member 30.

The light source-side lens 80 is what is called a meta-lens including a meta-surface portion 81 on, for example, the incidence surface 80a among the surfaces of the light source-side lens 80. The meta-surface portion 81 may be provided on the emission surface 80b. The meta-surface portion 81 may be provided on at least either the incidence surface 80a or the emission surface 80b. The meta-surface portion 81 converts an incoming wavefront from the light source 11 toward a slit 33 described below. The meta-surface portion 81 is formed using, for example, gallium nitride (GaN), silicone nitride (Si3N4), or the like. By the action of the meta-surface portion 81 provided on the incidence surface 80a, the wavefront of the light incident from the incidence surface 80a is converted toward the slit 33 described below and is emitted from the emission surface 80b. Therefore, the light emitted from the emission surface 80b is condensed to converge on an optical axis AX side in accordance with the shape of the slit 33 described below of the light-blocking member 30, as in the case where the light is emitted from the lens surface of a convex lens.

The meta-surface portion 81 includes a plurality of pillar portions 82. The pillar portion 82 has a columnar shape and protrudes from the incidence surface 80a toward the light source 11. The plurality of pillar portions 82 is arranged in a matrix at a predetermined pitch, for example, along the right-left direction and the front-rear direction. Each of the plurality of pillar portions 82 has a dimension in a predetermined direction equal to or less than twice the wavelength of the light emitted from the light source 11. In this manner, setting the dimension of the plurality of pillar portions 82 in the predetermined direction to be equal to or less than twice the wavelength of the light from the light source 11 can result in higher stability with respect to the phase, easier manufacturing, and thus a reduction in costs. According to the present embodiment, the predetermined direction for the dimension may be, for example, either the front-rear direction or the right-left direction.

The plurality of pillar portions 82 can be formed by a technique such as an electron beam lithography method or an ion etching method. In the light source-side lens 80, the meta-surface portion 81 and portions other than the meta-surface portion 81 may be made of materials having different dielectric constants and magnetic permeabilities.

In the light source-side lens 80, the meta-surface portion 81 is provided in the range where the light emitted from the light source 11 at an emission angle equal to or less than a predetermined angle α is incident. That is, the plurality of pillar portions 82 is formed on the incidence surface 80a of the light source-side lens 80 in the range where the light emitted from the light source 11 at an emission angle equal to or less than the predetermined angle α is incident. Further, in the light source-side lens 80, the plurality of pillar portions 82 is formed such that the converging angle of the light traveling to the light-blocking member 30 side is, for example, equal to or less than a predetermined angle β in the horizontal direction with respect to the optical axis AX side.

According to the present embodiment, D1 is the distance between the substrate 12 and the incidence surface 80a of the light source-side lens 80, D2 is the distance from the incidence surface 80a to the light-blocking member 30, D3 is the distance from the optical axis AX to both ends of the slit 33 described below of the light-blocking member 30 in the right-left direction, and D4 is the dimension from the optical axis AX to both ends of the meta-surface portion 81 in the right-left direction. Here, when the distance D1 is 2.5 mm, the distance D2 is 13.5 mm, the distance D3 is 2 mm, and the distance D4 is 4.0 mm, the predetermined angle α can be, for example, 60°, and the predetermined angle β can be, for example, 15°. The values of the distances D1 to D4 and the values of the predetermined angles α and β are not limited to those described above. A specific configuration of the meta-surface portion 81 will be described below.

Returning back to FIGS. 1 and 2, the light-blocking member 30 includes a slit forming portion 31 and a frame portion 32. In the light-blocking member 30, the slit forming portion 31 and the frame portion 32 are formed in a flat plate shape as a single member. The entire light-blocking member 30 is formed using a material capable of blocking light. Examples of such a material include a material such as a metal, but other materials may be used. The light-blocking member 30 may have a configuration in which the slit forming portion 31 and the frame portion 32 are formed as separate members.

The slit forming portion 31 is provided in, for example, a circular shape. The slit forming portion 31 has the slit 33. The slit 33 allows a part of the light emitted from the light source-side lens 80 to pass through. The slits 33 are formed, for example, in a state where the three slits 33 are arranged in the vertical direction. The number and arrangement of the slits 33 are not limited to those described above. According to the present embodiment, the slit 33 is formed to have its longitudinal direction in one direction, for example, the vertical direction as a whole. The slit 33 may be configured to have its longitudinal direction in a direction different from the vertical direction, such as a right-left direction or an oblique direction as a whole.

The frame portion 32 protrudes linearly in the right-left direction from the slit forming portion 31. The frame portion 32 has rounded corners on both sides in the right-left direction. Both front and rear surfaces of the frame portion 32 are planar. The frame portion 32 includes a positioning opening 32a and a fixing opening 32b. A positioning protrusion 53a of the support member 50 described below is inserted into the positioning opening 32a. A fixing member 90 described below is inserted into the fixing opening 32b.

The light-blocking member 30 is formed to cover the light source-side lens 80 when viewed from the front. With this configuration, the light-blocking member 30 can block the light passing through the light source-side lens 80.

The projecting lens 40 includes a lens portion 41, a cylindrical portion 42, and a frame portion 44. The lens portion 41 projects the light having passed through the slit 33 onto the road surface in front of the vehicle to form an irradiation pattern. The lens portion 41, the cylindrical portion 42, and the frame portion 44 are formed as a single member in the projecting lens 40. The projecting lens 40 may have a configuration in which at least one of the lens portion 41, the cylindrical portion 42, and the frame portion 44 is formed of a separate member. The lens portion 41 is formed using a material capable of transmitting light from the light source 11. Examples of such a material include a resin material such as acrylic, but other materials may be used. In this case, the entire projecting lens 40 can be easily formed by integral molding using the material forming the lens portion 41. The projecting lens 40 is entirely formed of a material different from that of the light source-side lens 80, but may be entirely formed of the same material as that of the light source-side lens 80. In the projecting lens 40, portions different from the lens portion 41, i.e., at least a part of the cylindrical portion 42 and the frame portion 44, may be formed using a material different from that of the lens portion 41.

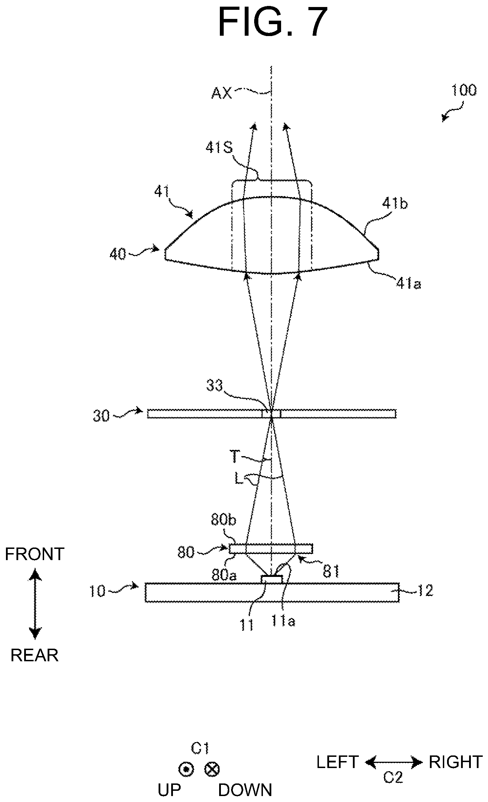

The lens portion 41 has an incidence surface 41a and an emission surface 41b (see FIG. 7). Light having passed through the slit 33 is incident on the incidence surface 41a. The emission surface 41b emits forward the light incident from the incidence surface 41a.

The cylindrical portion 42 holds the lens portion 41. The cylindrical portion 42 has, for example, a cylindrical shape. The cylindrical portion 42 connects the lens portion 41 and the frame portion 44. The cylindrical portion 42 is provided to protrude forward with respect to the frame portion 44. With this configuration, the lens portion 41 is provided in front of the frame portion 44.

The frame portion 44 holds the lens portion 41 via the cylindrical portion 42. The frame portion 44 has a flat plate shape. The frame portion 44 includes an annular portion 45 protruding in the vertical direction from the cylindrical portion 42 and a belt-shaped portion 46 protruding in the right-left direction from the cylindrical portion 42. The annular portion 45 is provided annularly along the outer periphery of the cylindrical portion 42. The belt-shaped portion 46 is provided linearly in the right-left direction from the cylindrical portion 42. The belt-shaped portion 46 has rounded corners on both sides in the right-left direction. The belt-shaped portion 46 includes a positioning opening 46a and a fixing opening 46b. The positioning protrusion 53a of the support member 50 described below is inserted into the positioning opening 46a. The fixing member 90 described below is inserted into the fixing opening 46b. The belt-shaped portion 46 includes contact portions 46c, 46d. The contact portion 46c is provided along the outer periphery of the positioning opening 46a and protrudes rearward from the belt-shaped portion 46. The contact portion 46d is provided along the outer periphery of the fixing opening 46b and protrudes rearward from the belt-shaped portion 46. The contact portions 46c, 46d are formed so that the distal end surfaces in the protruding direction are planar. The frame portion 44 is in contact with the light-blocking member 30 at the contact portions 46c, 46d. With this configuration, it is possible to ensure the positional accuracy of the frame portion 44 by appropriately defining the dimension of the belt-shaped portion 46 such as the height of the contact portions 46c, 46d in the protruding direction.

The support member 50 includes a base portion 51, a fin 52, and a fixing portion 53. The base portion 51 has a flat plate shape. The base portion 51 has a support surface 51a that supports the light source unit 10. The support surface 51a is a front surface of the base portion 51 and supports the substrate 12.

The fin 52 protrudes rearward from the base portion 51. The plurality of fins 52 is provided. The fin 52 radiates heat generated in the light source 11.

The fixing portion 53 protrudes forward from the support surface 51a of the base portion 51. The fixing portion 53 fixes the frame portion 32 and the frame portion 44. The fixing portion 53 includes a positioning protrusion 53a and a fixing opening 53b. The positioning protrusion 53a and the fixing opening 53b are provided on an end surface 53c on the front side of the fixing portion 53.

The positioning protrusion 53a protrudes forward and penetrates the positioning opening 32a provided in the frame portion 32 and the positioning opening 46a provided in the belt-shaped portion 46 of the frame portion 44 in the front-rear direction. The fixing member 90 described below is inserted into the fixing opening 53b.

The end surface 53c is formed to be, for example, planar. The end surface 53c is formed to be perpendicular or substantially perpendicular to the optical axis AX.

The fixing member 90 fixes the frame portion 32 and the frame portion 44 to the fixing portion 53. For example, a fastening member such as a screw is used as the fixing member 90. The fixing member 90 is inserted into the fixing opening 53b of the fixing portion 53 through the fixing opening 32b provided in the frame portion 32 and the fixing opening 46b provided in the belt-shaped portion 46 of the frame portion 44.

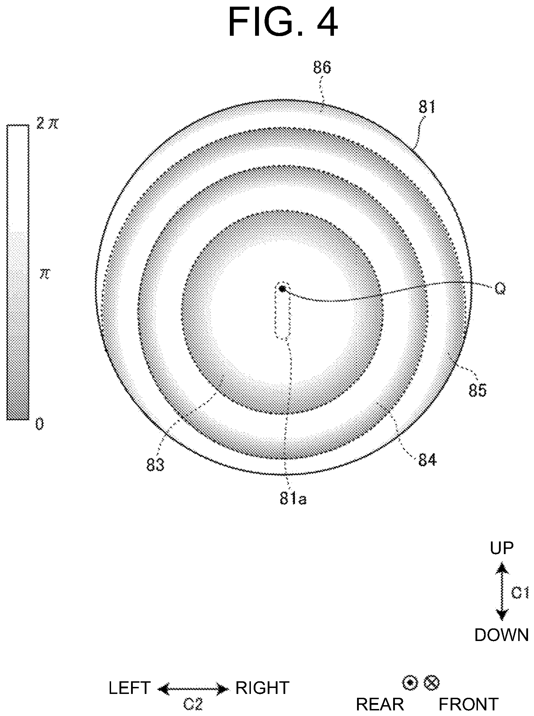

Next, the configuration of the meta-surface portion 81 will be described in detail. FIG. 4 is a diagram illustrating an example of a phase distribution in the meta-surface portion 81. As illustrated in FIG. 4, in the meta-surface portion 81, the phase distribution is set such that the phases periodically change in a radial direction along the incidence surface 80a from a reference region 81a including a reference position Q corresponding to the optical axis AX of the light source-side lens 80. To be more specific, the meta-surface portion 81 includes a portion corresponding to a first period in which the phases change from 2π to 0 in the radial direction from the reference region 81a in the phase distribution. According to the present embodiment, the portion corresponding to the first period is a central region 83.

The meta-surface portion 81 includes a portion corresponding to each of the second and subsequent periods outside the central region 83. In the portion corresponding to the second period, the phase changes from 2π to 0 in the radial direction from the outer peripheral portion of the central region 83. According to the present embodiment, the portion corresponding to the second period is a peripheral region 84. In the portion corresponding to the third period in the phase distribution, the phase changes from 2π to 0 in the radial direction from the outer peripheral portion of the peripheral region 84. According to the present embodiment, the portion corresponding to the third period is a peripheral region 85. In the portion corresponding to the fourth period in the phase distribution, the phase decreases from 2π in the radial direction from the outer peripheral portion of the peripheral region 85. According to the present embodiment, the portion corresponding to the fourth period is a peripheral region 86.

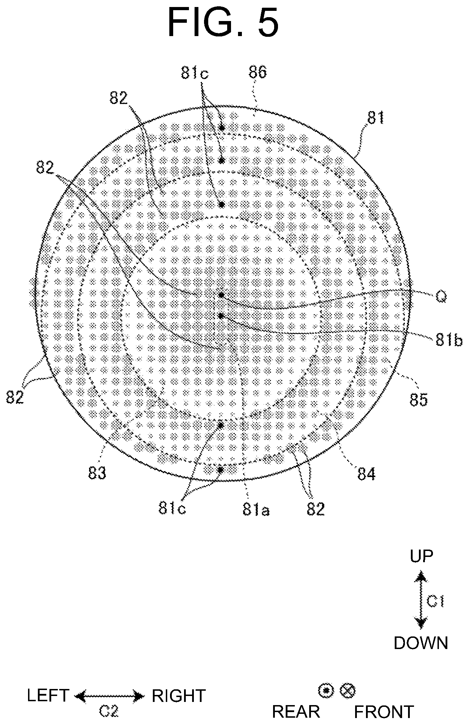

FIG. 5 is a diagram schematically illustrating an example of the meta-surface portion 81 when viewed from the axial direction of the optical axis AX. As illustrated in FIG. 5, in the meta-surface portion 81, the plurality of pillar portions 82 is provided at a predetermined pitch in a first direction C1 and a second direction C2 with the reference position Q as the center over the entire central region 83 and the entire peripheral regions 84, 85, and 86. The first direction C1 is a direction parallel to the longitudinal direction of the slit 33 along the incidence surface 80a. The second direction C2 is a direction perpendicular to the first direction C1 along the incidence surface 80a. According to the present embodiment, the first direction C1 is the vertical direction, and the second direction C2 is the right-left direction.

In the meta-surface portion 81, the central region 83 includes the reference position Q and includes a portion where the diameters of the pillar portions 82 decrease as the distance from the reference position Q increases. In the central region 83, the diameter of the pillar portion 82 becomes the largest in the above-described reference region 81a (see FIGS. 4 and 5). According to the present embodiment, the pillar portions 82 provided in the reference region 81a have the same diameter. In the central region 83, the diameters of the pillar portions 82 gradually decrease as the distance from the reference region 81a increases in the radial direction.

In the central region 83, the center position of the reference region 81a in the first direction C1 and the second direction C2 is a peak position 81b where the diameter of the pillar portion 82 becomes the largest. The peak position 81b is a position shifted downward in the first direction C1 with respect to the reference position Q. Thus, the peak position 81b is located below the reference position Q in the first direction C1.

In the central region 83, the number of the pillar portions 82 in the first direction C1 with respect to the reference position Q is larger than the number of the pillar portions 82 in the second direction C2. In the central region 83, the number of the pillar portions 82 provided on the lower side in the first direction C1 from the reference position Q is larger by 20% or more than the number of the pillar portions 82 provided on the left side and the right side in the second direction C2 from the reference position Q. The number of the pillar portions 82 provided on the upper side in the first direction C1 from the reference position Q is smaller by 10% or more than the number of the pillar portions 82 provided on each of the left side and the right side in the second direction C2 from the reference position Q. The numbers of the pillar portions 82 in the first direction C1 and the second direction C2 do not include the pillar portion 82 at the reference position Q. Further, the number of the pillar portions 82 described above is an example, and is not limited to the above description.

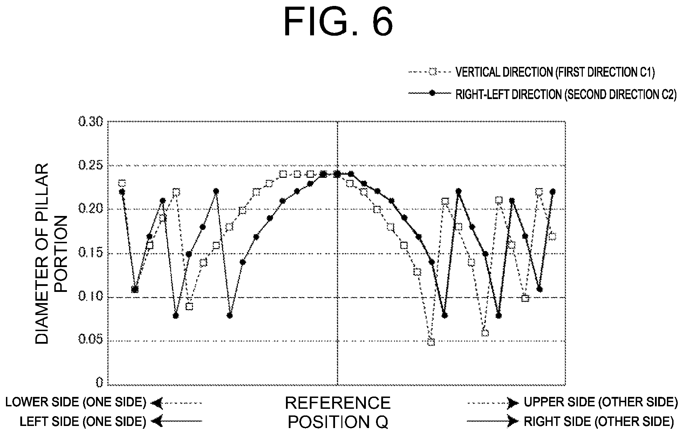

FIG. 6 is a graph illustrating changes in the diameters of the pillar portions 82 in the meta-surface portion 81 illustrated in FIG. 5. **In** FIG. 6, changes in the diameter from the reference position Q to the lower side (one side in the first direction) and the upper side (the other side in the first direction) in the first direction C1 are indicated by white squares and broken lines, and changes in the diameter from the reference position Q to the left side (one side in the second direction) and the right side (the other side in the second direction) in the second direction C2 are indicated by black circles and solid lines.

As illustrated in FIGS. 5 and 6, in the central region 83, changes in the diameters of the pillar portions 82 in a direction away from the reference position Q are more gradual on the lower side in the first direction C1 with respect to the reference position Q than on the upper side in the first direction C1. That is, in the case of equal distances from the reference position Q to the lower side and the upper side in the first direction C1, the rate of change in the diameters of the pillar portions 82 is smaller on the lower side than on the upper side. In other words, in the central region 83, changes in the diameters of the pillar portions 82 in a direction away from the reference position Q are more rapid on the upper side in the first direction C1 than on the lower side in the first direction C1 with respect to the reference position Q. That is, in the case of equal distances to the lower side and the upper side in the first direction C1 from the reference position Q, the rate of change in the diameters of the pillar portions 82 is larger on the upper side than on the lower side.

In the central region 83, changes in the diameters of the pillar portions 82 are the same on the left side in the second direction C2 and on the right side in the second direction C2 from the reference position Q. That is, in the central region 83, when the reference position Q is used as a reference, changes in the diameters of the pillar portions 82 are symmetrical with respect to the second direction C2.

In the central region 83, changes in the diameters of the pillar portions 82 on the lower side in the first direction C1 from the reference position Q are more gradual than changes in the diameters of the pillar portions 82 on the left side or the right side in the second direction C2 from the reference position Q. That is, in the case of equal distances from the reference position Q to the lower side in the first direction C1 and to the left side (or the right side) in the second direction C2, the rate of change in the diameters of the pillar portions 82 is smaller on the lower side in the first direction C1 than on the left side (or the right side) in the second direction C2.

In the central region 83, changes in the diameters of the pillar portions 82 on the upper side in the first direction C1 from the reference position Q are more rapid than changes in the diameters of the pillar portions 82 on the left side or the right side in the second direction C2 from the reference position Q. That is, in the case of equal distances from the reference position Q to the upper side in the first direction C1 and the left side (or the right side) in the second direction C2, the rate of change in the diameters of the pillar portions 82 is larger on the upper side in the first direction C1 than on the left side (or the right side) in the second direction C2.

In the central region 83, the pillar portion 82 having the largest diameter in the first direction C1 is provided in a region that includes the reference position Q and extends downward from the reference position Q. To be specific, the diameters of the pillar portion 82 provided at the reference position Q and the plurality of pillar portions 82 arranged downward from the reference position Q are the largest in the first direction C1.

The peripheral regions 84, 85, and 86 are provided in an annular shape to surround the outer periphery of the central region 83. The peripheral regions 84, 85, and 86 are in multiple layers provided in a direction away from the central region 83 along the incidence surface 80a. In each of the peripheral regions 84, 85, and 86, the pillar portions 82 are formed such that the diameters thereof gradually decrease as the distance from the central region 83 increases along the incidence surface 80a. In the peripheral regions 84, 85, and 86, the number of the peak positions 81c where the diameter of the pillar portion 82 becomes the largest is larger on the upper side than on the lower side in the first direction C1.

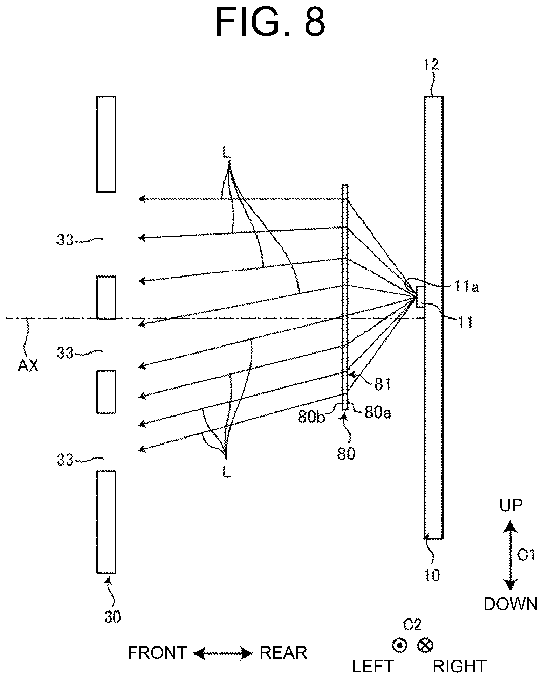

Next, an example of the operation of the vehicle lamp 100 configured as described above will be described. FIGS. 7 and 8 are diagrams illustrating an example of the operation of the vehicle lamp 100 according to the first embodiment. FIG. 7 is a view from above, and FIG. 8 is a view from the left. FIG. 8 is an enlarged view of the configuration of the light source 11 and the light source-side lens 80 side. The vehicle lamp 100 emits light from the light emission surface 11a of the light source 11 in response to an operation of a direction indicator, or the like, by a driver or in conjunction with lighting of a hazard lamp or the like.

Light L emitted from the center of the light emission surface 11a is incident on the incidence surface 80a of the light source-side lens 80, and the incident wavefront is converted into a curved wavefront in the converging direction by the action of the meta-surface portion 81 provided on the incidence surface 80a. The light L with a converted wavefront is emitted forward from the emission surface 80b such that, with regard to the first direction C1, the light is diffused to the lower side and the diffusion of the light to the upper side is suppressed (see FIG. 8) and, with regard to the second direction C2, the light is condensed on the optical axis AX side (see FIGS. 3 and 7). According to the present embodiment, the light L is emitted in a direction parallel or substantially parallel to the optical axis AX at the uppermost portion in the first direction C1.

The light L emitted forward from the emission surface 80b reaches the slit forming portion 31 of the light-blocking member 30. A part of the light L having reached the slit forming portion 31 passes through the slit 33 of the light-blocking member 30, and the rest is blocked by the light-blocking member 30. According to the present embodiment, since the light L reaches the slit forming portion 31 in a state of being diffused to the lower side in the first direction C1 by the meta-surface portion 81, the light L is efficiently supplied to cover the slit 33 having its longitudinal direction in the first direction C1. The light L having passed through the slit 33 is incident on the incidence surface 41a of the lens portion 41 and is emitted from the emission surface 41b to the front side of the vehicle.

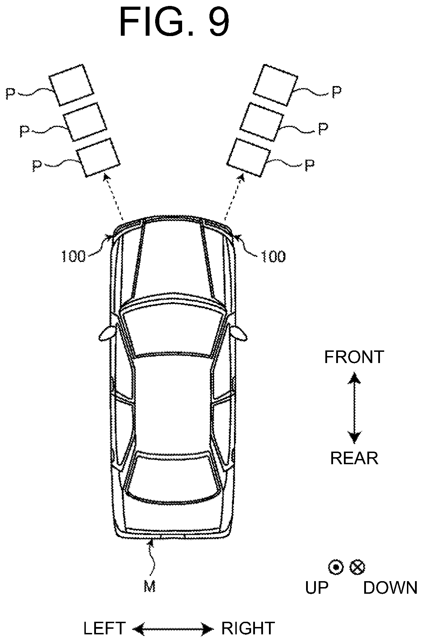

FIG. 9 is a diagram illustrating an example of an irradiation pattern formed on a road surface by the vehicle lamp 100. As illustrated in FIG. 9, an irradiation pattern P having its longitudinal direction in one direction is formed on the road surface in front of the vehicle with the light L emitted to the front side of the vehicle. The irradiation pattern P is emitted with sufficient brightness over the entire longitudinal direction.

As described above, the vehicle lamp 100 according to the present embodiment includes the light source 11 that emits light, the light source-side lens 80 that has a plate shape, includes the meta-surface portion 81 that converts a wavefront of the light from the light source 11, and emits the light with a converted wavefront, the light-blocking member 30 including the slit 33 that allows a part of the light condensed by the light source-side lens 80 to pass through, and the projecting lens 40 that irradiates a road surface with the light having passed through the slit 33 to form the irradiation pattern P, the slit 33 is formed to have its longitudinal direction in one direction, the meta-surface portion 81 includes the plurality of pillar portions 82 that is provided at a predetermined pitch in the first direction C1 parallel to the longitudinal direction of the slit 33 and in the second direction C2 perpendicular to the first direction C1 with the reference position Q corresponding to the optical axis of the light source-side lens 80 as a center, the meta-surface portion 81 includes the central region 83 that includes the reference position Q and includes a portion where the diameters of the pillar portions 82 gradually decrease as the distance from the reference position Q increases, and, in the central region 83, changes in the diameters of the pillar portions 82 are more gradual on one side in the first direction C1 with respect to the reference position Q than on the other side in the first direction C1.

With this configuration, the light source-side lens 80 has a flat plate shape having the incidence surface 80a and the emission surface 80b and includes, on the incidence surface 80a, the meta-surface portion 81 that converts the wavefront of the light from the light source 11 into a curved wavefront in the converging direction; thus, the thickness can be reduced as compared with a case where a convex lens is used. This makes it possible to adopt the configuration in which the position of the emission surface 80b is provided on the light source 11 side and to reduce a converging angle T to the light-blocking member 30. Therefore, since the irradiation pattern P can be formed without using a portion of the projecting lens 40 that is greatly affected by aberration, it is possible to suppress the deterioration of the appearance of the irradiation pattern P. With the configuration where the slit 33 has its longitudinal direction in one direction, in the central region 83 of the meta-surface portion 81, changes in the diameters of the pillar portions 82 are more gradual on one side in the first direction C1 with respect to the reference position Q than on the other side, and therefore the light L reaches the slit forming portion 31 in a state of being diffused to the lower side in the first direction C1 by the meta-surface portion 81. Thus, the light L is efficiently supplied to cover the slit 33 having its longitudinal direction in the first direction C1, and the irradiation pattern P having its longitudinal direction in one direction is emitted with sufficient brightness over the entire longitudinal direction. Accordingly, it is possible to suppress the deterioration of the appearance of the pattern emitted onto the road surface.

In the vehicle lamp 100 according to the present embodiment, in the central region 83 of the meta-surface portion 81, changes in the diameters of the pillar portions 82 from the reference position Q are the same on one side in the second direction C2 and on the other side in the second direction C2. With this configuration, the light can reach the slit 33 with a uniform amount of light in the second direction C2. Thus, the irradiation pattern P is emitted with uniform brightness in the lateral direction.

In the vehicle lamp 100 according to the present embodiment, in the central region 83 of the meta-surface portion 81, changes in the diameters of the pillar portions 82 on one side in the first direction C1 from the reference position Q are more gradual than changes in the diameters of the pillar portions 82 on one side or the other side in the second direction C2 from the reference position Q. With this configuration, the light L can be appropriately diffused to the lower side in the first direction C1.

In the vehicle lamp 100 according to the present embodiment, in the central region 83 of the meta-surface portion 81, changes in the diameters of the pillar portions 82 on the other side in the first direction C1 from the reference position Q are more rapid than changes in the diameters of the pillar portions 82 on one side or the other side in the second direction C2 from the reference position Q. With this configuration, it is possible to appropriately diffuse the light L to the lower side while suppressing the diffusion of the light L to the upper side in the first direction C1.

In the vehicle lamp 100 according to the present embodiment, in the central region 83 of the meta-surface portion 81, the peak position 81b where the diameter of the pillar portion 82 becomes the largest in the first direction C1 is provided on one side with respect to the reference position Q. With this configuration, the light L can be appropriately diffused to the lower side in the first direction C1.

In the vehicle lamp 100 according to the present embodiment, in the central region 83, the number of the pillar portions 82 in the first direction C1 with respect to the reference position Q is larger than the number of the pillar portions 82 in the second direction C2. With this configuration, the light L can be appropriately diffused to the lower side in the first direction C1.

In the vehicle lamp 100 according to the present embodiment, in the central region 83, the number of the pillar portions 82 provided on one side in the first direction C1 from the reference position Q is larger by 20% or more than the number of the pillar portions 82 provided on each of the left side and the right side in the second direction C2 from the reference position Q, and the number of the pillar portions 82 provided on the other side in the first direction C1 from the reference position Q is smaller by 10% or more than the number of the pillar portions 82 provided on each of the left side and the right side in the second direction C2 from the reference position Q. With this configuration, the light L can be appropriately diffused to the lower side in the first direction C1.

In the vehicle lamp 100 according to the present embodiment, in the meta-surface portion 81, a phase distribution is set such that phases periodically change in the radial direction along the incidence surface 80a from the reference position Q, the central region 83 is a region corresponding to a first period of the phase distribution including the reference position Q, the meta-surface portion 81 includes the peripheral regions 84, 85, and 86 that are provided in an annular shape to surround the central region 83 and that correspond to second and subsequent periods of the phase distribution, and the peripheral regions 84, 85, and 86 are formed such that the diameters of the pillar portions 82 gradually decrease as the distance from the central region 83 increases along the incidence surface 80a. With this configuration, the light L can be appropriately diffused to the lower side in the first direction C1.

In the vehicle lamp 100 according to the present embodiment, the peripheral regions 84, 85, and 86 are in multiple layers provided in a direction outward away from the center region 83, and the number of the peak positions 81c where the diameter of the pillar portion 82 becomes the largest is larger on the other side than on one side in the first direction C1. With this configuration, the light L can be appropriately diffused to the lower side in the first direction C1.

The technical scope of the present disclosure is not limited to the above-described embodiment, and appropriate modifications can be made without departing from the spirit of the present disclosure. For example, in the above-described embodiment, the configuration in which the vehicle lamp 100 is provided in the front portion of the vehicle M has been described as an example, but this is not a limitation. The vehicle lamp 100 may be configured to be provided in a rear portion or a side portion of the vehicle M, and may be configured to form the irradiation pattern on a road surface behind or beside the vehicle M.

### <Second Embodiment>

A second embodiment of the vehicle lamp according to the present disclosure will be described below with reference to the drawings. The present invention is not limited to the embodiment. Further, components in the following embodiment include components that can be easily replaced by those skilled in the art or substantially the same components.

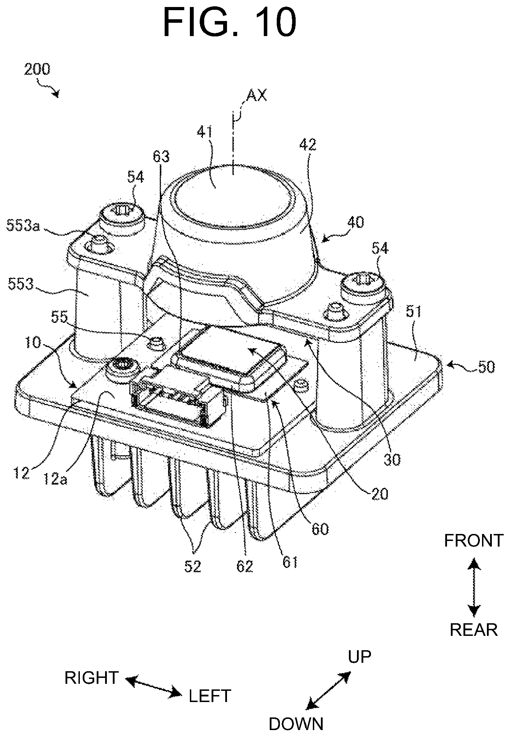

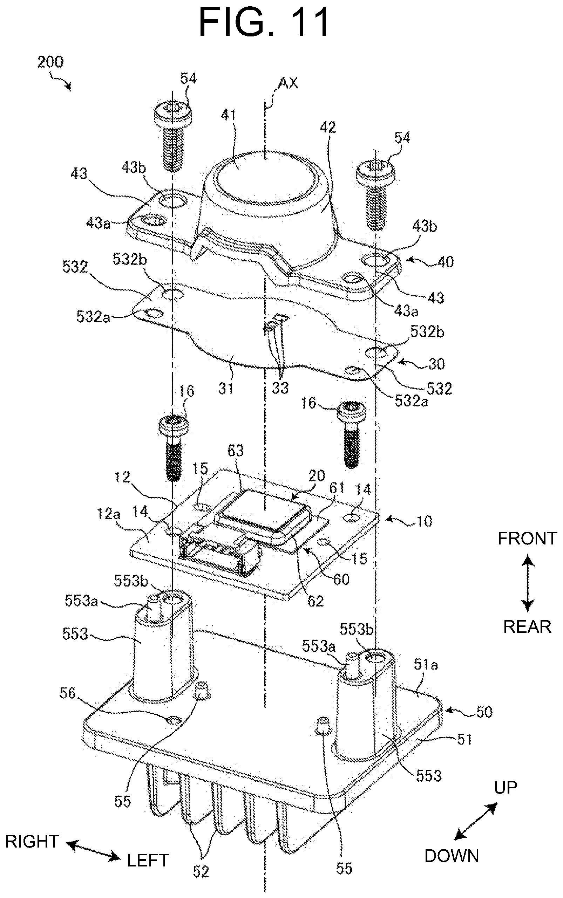

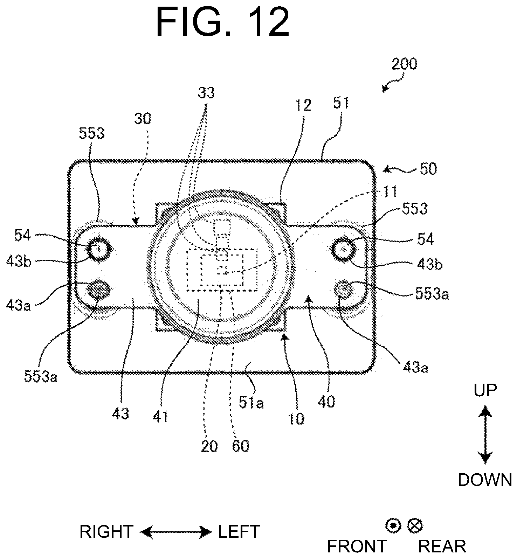

FIGS. 10 to 12 are diagrams illustrating an example of a vehicle lamp 200 according to the second embodiment. FIG. 10 is a perspective view, FIG. 11 is an exploded perspective view, and FIG. 12 is a view seen from the axial direction of the optical axis AX. As illustrated in FIGS. 10 to 12, the vehicle lamp 200 includes the light source unit 10, a condensing lens 20, the light-blocking member 30, the projecting lens 40, the support member 50, and a frame member 60.

The light source unit 10 includes the light source 11 and the substrate (light source substrate) 12. The light source 11 is, for example, a semiconductor-type light source such as an LED. The light source 11 has the light emission surface 11a that emits light. The light emission surface 11a is provided to face an incidence surface 20a of the condensing lens 20. The light source 11 emits light of a single color, e.g., orange (amber) light from the light emission surface 11a. For example, the one light source 11 is provided. The plurality of light sources 11 may be provided. Further, the color of light emitted from the light emission surface 11a is not limited to orange.

The substrate 12 has a mounting surface 12a. The light source 11 is mounted on the mounting surface 12a. On the substrate 12, wiring, a circuit, and the like, for supplying power to the light source 11 are formed. The substrate 12 has openings 14, 15. A screw member 16 is inserted into the opening 14. The screw member 16 fixes the substrate 12 to the base portion 51 of the support member 50 described below. A positioning pin 55 provided in the base portion 51 of the support member 50 described below is inserted into the opening 15.

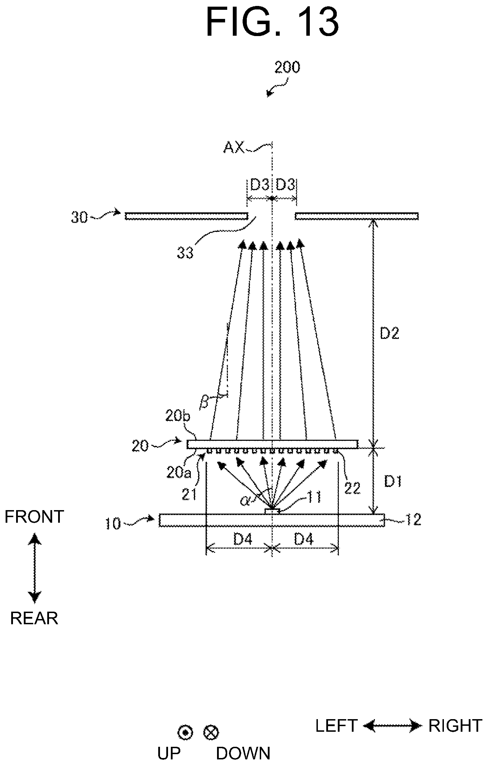

The condensing lens 20 condenses and emits light emitted from the light source 11 to the light-blocking member 30 side. The condensing lens 20 is formed in a plate shape such as a flat plate shape by using a light-permeable material such as quartz glass. The condensing lens 20 can be formed to have a thickness (dimension in the front-rear direction) of about 0. 1 mm to 1 mm. The condensing lens 20 may be fixed to the substrate 12, or may be fixed to the base portion 51 of the support member 50 described below. FIG. 13 is a diagram illustrating an example of the condensing lens 20. In addition to the condensing lens 20, FIG. 13 also illustrates the light source unit 10 and the light-blocking member 30 described below.

As illustrated in FIG. 13, the condensing lens 20 has an incidence surface 20a and an emission surface 20b. The incidence surface 20a and the emission surface 20b are, for example, planar. The incidence surface 20a and the emission surface 20b may be curved surfaces. The condensing lens 20 is provided such that the incidence surface 20a faces the light source 11 and the emission surface 20b faces the light-blocking member 30.

The condensing lens 20 is what is called a meta-lens including a meta-surface portion 21 on the incidence surface 20a. The meta-surface portion 21 may be provided on at least either the incidence surface 20a or the emission surface 20b. The meta-surface portion 21 converts an incident wavefront from the light source 11 toward the slit 33 described below. The meta-surface portion 21 is formed using, for example, gallium nitride (GaN), silicone nitride (Si3N4), or the like. By the action of the meta-surface portion 21 provided on the incidence surface 20a, the wavefront of the light incident from the incidence surface 20a is converted toward the slit 33 described below and is emitted from the emission surface 20b. Therefore, the light emitted from the emission surface 20b is condensed to converge on the optical axis AX side in accordance with the shape of the slit 33 described below of the light-blocking member 30, as in the case where the light is emitted from the lens surface of a convex lens.

The meta-surface portion 21 includes a plurality of pillar portions 22. The pillar portion 22 has a columnar shape and protrudes from the incidence surface 20a toward the light source 11. The plurality of pillar portions 22 is arranged in a matrix at a predetermined pitch, for example, along the right-left direction and the front-rear direction. Each of the plurality of pillar portions 22 has a dimension in a predetermined direction equal to or less than twice the wavelength of the light emitted from the light source 11. In this manner, setting the dimension of the plurality of pillar portions 22 in the predetermined direction to be equal to or less than twice the wavelength of the light from the light source 11 can result in higher stability with respect to the phase, easier manufacturing, and thus a reduction in costs. According to the present embodiment, the predetermined direction for the dimension may be, for example, either the front-rear direction or the right-left direction.

The plurality of pillar portions 22 can be formed by a technique such as an electron beam lithography method or an ion etching method. In the condensing lens 20, the meta-surface portion 21 and portions other than the meta-surface portion 21 may be made of materials having different dielectric constants and magnetic permeabilities.

In the condensing lens 20, the meta-surface portion 21 is provided in the range where the light emitted from the light source 11 at an emission angle equal to or less than the predetermined angle α is incident. That is, the plurality of pillar portions 22 is formed on the incidence surface 20a of the condensing lens 20 in the range where the light emitted from the light source 11 at an emission angle equal to or less than the predetermined angle α is incident. Further, in the condensing lens 20, the plurality of pillar portions 22 is formed such that the converging angle of the light traveling to the light-blocking member 30 side is, for example, equal to or less than the predetermined angle β in the horizontal direction with respect to the optical axis AX side.

According to the present embodiment, D1 is the distance between the substrate 12 and the incidence surface 20a of the condensing lens 20, D2 is the distance from the incidence surface 20a to the light-blocking member 30, D3 is the distance from the optical axis AX to both ends of the slit 33 described below of the light-blocking member 30 in the right-left direction, and D4 is the distance from the optical axis AX to both ends of the meta-surface portion 21 in the right-left direction. Here, when the distance D1 is 2.5 mm, the distance D2 is 13.5 mm, the distance D3 is 2 mm, and the distance D4 is 4.0 mm, the predetermined angle α can be, for example, 60°, and the predetermined angle β can be, for example, 15°. The values of the distances D1 to D4 and the values of the predetermined angles α and β are not limited to those described above.

Referring back to FIGS. 10 to 12, the light-blocking member 30 includes the slit forming portion 31 and a projection 532. In the light-blocking member 30, the slit forming portion 31 and the projection 532 are formed in a flat plate shape as a single member. The entire light-blocking member 30 is formed using a material capable of blocking light. Examples of such a material include a material such as a metal, but other materials may be used. The light-blocking member 30 may have a configuration in which the slit forming portion 31 and the projection 532 are formed as separate members.

The slit forming portion 31 is provided in, for example, a circular shape. The slit forming portion 31 includes the slit 33. The slit 33 allows a part of the light condensed by the condensing lens 20 to pass through. The slits 33 are formed, for example, in a state where the three slits 33 are arranged in the vertical direction. The number and arrangement of the slits 33 are not limited to those described above.

The projection 532 protrudes linearly in the right-left direction from the slit forming portion 31. The projection 532 has rounded corners on both sides in the right-left direction. Both front and rear surfaces of the projection 532 are planar. The projection 532 has openings 532a, 532b. A protrusion 553a of the support member 50 described below is inserted into the opening 532a. A screw member 54 described below is inserted into the opening 532b.

The light-blocking member 30 is formed to cover the condensing lens 20 when viewed from the front. With this configuration, the light-blocking member 30 can block the light passing through the condensing lens 20.

The projecting lens 40 includes the lens portion 41, the cylindrical portion 42, and a projection 43. The lens portion 41 projects the light having passed through the slit 33 onto the road surface in front of the vehicle to form an irradiation pattern. In the projecting lens 40, the lens portion 41, the cylindrical portion 42, and the projection 43 are formed as a single member.

The projecting lens 40 may have a configuration in which at least one of the lens portion 41, the cylindrical portion 42, and the projection 43 is formed of a separate member. The lens portion 41 is formed using a material capable of transmitting light from the light source 11. Examples of such a material include a resin material such as acrylic, but other materials may be used. In this case, the entire projecting lens 40 can be easily formed by integral molding using the material forming the lens portion 41. The projecting lens 40 is entirely formed of a material different from that of the condensing lens 20, but may be entirely formed of the same material as that of the condensing lens 20. In the projecting lens 40, portions different from the lens portion 41, i.e., at least a part of the cylindrical portion 42 and the projection 43, may be formed using a material different from that of the lens portion 41.

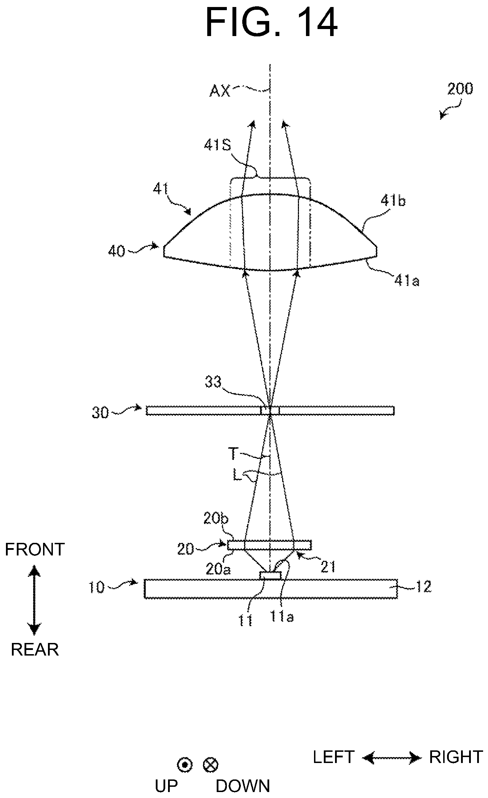

The lens portion 41 has the incidence surface 41a and the emission surface 41b (see FIG. 14). Light having passed through the slit 33 is incident on the incidence surface 41a. The emission surface 41b emits forward the light incident from the incidence surface 41a.

The cylindrical portion 42 holds the lens portion 41. The cylindrical portion 42 has, for example, a cylindrical shape. The cylindrical portion 42 connects the lens portion 41 and the projection 43. The cylindrical portion 42 is provided to protrude forward with respect to the projection 43. With this configuration, the lens portion 41 is provided in front of the projection 43.

The projection 43 holds the lens portion 41 via the cylindrical portion 42. The projection 43 has a flat plate shape. The projection 43 has openings 43a, 43b. The openings 43a, 43b are used for positioning with respect to a fixing portion 553 of the support member 50 described below.

The support member 50 includes the base portion 51, the fin 52, and the fixing portion 553. The base portion 51 has a flat plate shape. The base portion 51 has the support surface 51a that supports the light source unit 10. The support surface 51a is a front surface of the base portion 51 and supports the substrate 12.

The fin 52 protrudes rearward from the base portion 51. The plurality of fins 52 is provided. The fin 52 radiates heat generated in the light source 11.

The fixing portion 553 protrudes forward from the support surface 51a of the base portion 51. The fixing portion 553 fixes the projection 532 and the projection 43. The fixing portion 553 includes a protrusion 553a and an opening 553b.

The protrusion 553a protrudes forward and passes through the opening 532a of the projection 532 and the opening 43a of the projection 43 in the front-rear direction.

A screw member 54 is inserted into the opening 553b. The screw member 54 fixes the projection 532 and the projection 43 to the fixing portion 553. The screw member 54 is inserted into the opening 553b of the fixing portion 553 through the opening 532b of the projection 532 and the opening 43b of the projection 43.

FIG. 14 is a diagram illustrating an example of the operation of the vehicle lamp 200 according to the second embodiment. The vehicle lamp 200 emits light from the light emission surface 11a of the light source 11 in response to an operation of a direction indicator, or the like, by a driver or in conjunction with lighting of a hazard lamp or the like.

The light L emitted from the light emission surface 11a is incident on the incidence surface 20a of the condensing lens 20, and the incident wavefront is converted into a curved wavefront in the converging direction by the action of the meta-surface portion 21 provided on the incidence surface 20a. The light L with a converted wavefront is emitted forward from the emission surface 20b in a state of being condensed on the optical axis AX side.

The light L emitted forward from the emission surface 20b reaches the slit forming portion 31 of the light-blocking member 30. A part of the light L having reached the slit forming portion 31 passes through the slit 33 of the light-blocking member 30, and the rest is blocked by the light-blocking member 30. The light L having passed through the slit 33 is incident on the incidence surface 41a of the lens portion 41 and is emitted from the emission surface 41b to the front side of the vehicle.

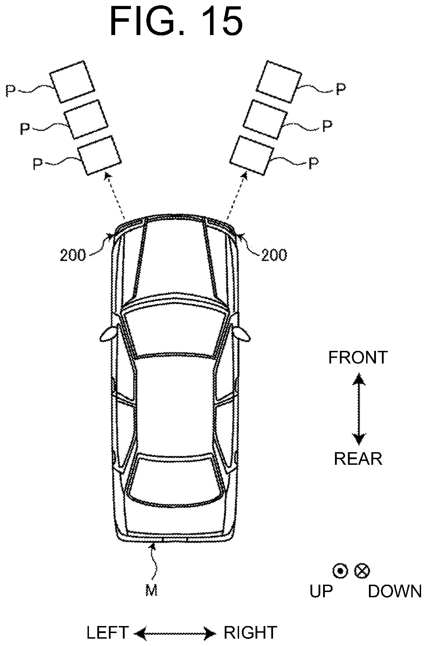

FIG. 15 is a diagram illustrating an example of an irradiation pattern formed on a road surface by the vehicle lamp 200. As illustrated in FIG. 15, the irradiation pattern P is formed on the road surface in front of the vehicle with the light L emitted to the front side of the vehicle.

The vehicle lamp 200 according to the present embodiment has a configuration in which the condensing lens 20 has a flat plate shape and the meta-surface portion 21 is provided on the incidence surface 20a. Therefore, as compared with the case where a convex lens is used, the thickness can be reduced, and the position of the emission surface 20b can be closer to the light source 11 side. Therefore, the converging angle T can be reduced as compared with the case where a convex lens is used. In this case, the light L having passed through the slit 33 does not reach the outer peripheral side of the incidence surface 41a of the projecting lens 40. Therefore, the irradiation pattern P can be formed without using a portion of the projecting lens 40 that is greatly affected by aberration. Therefore, the irradiation pattern P can be clearly formed.

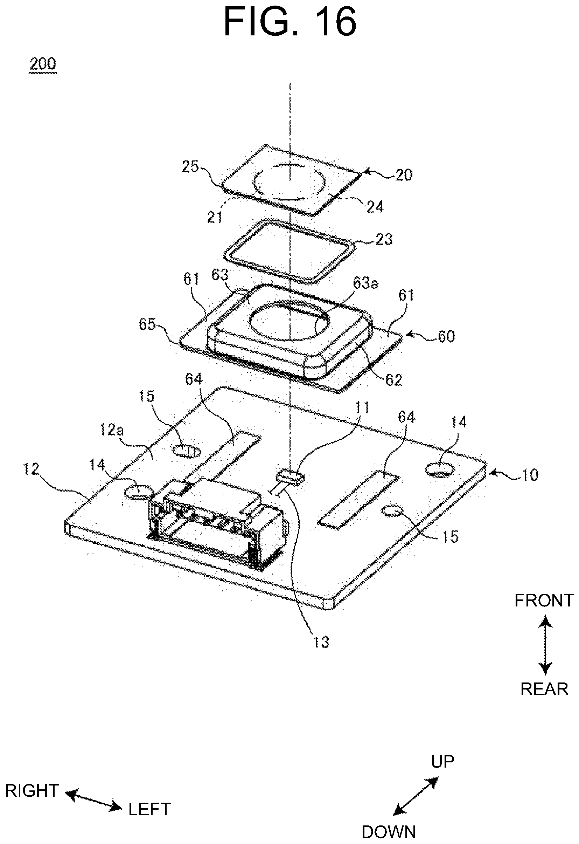

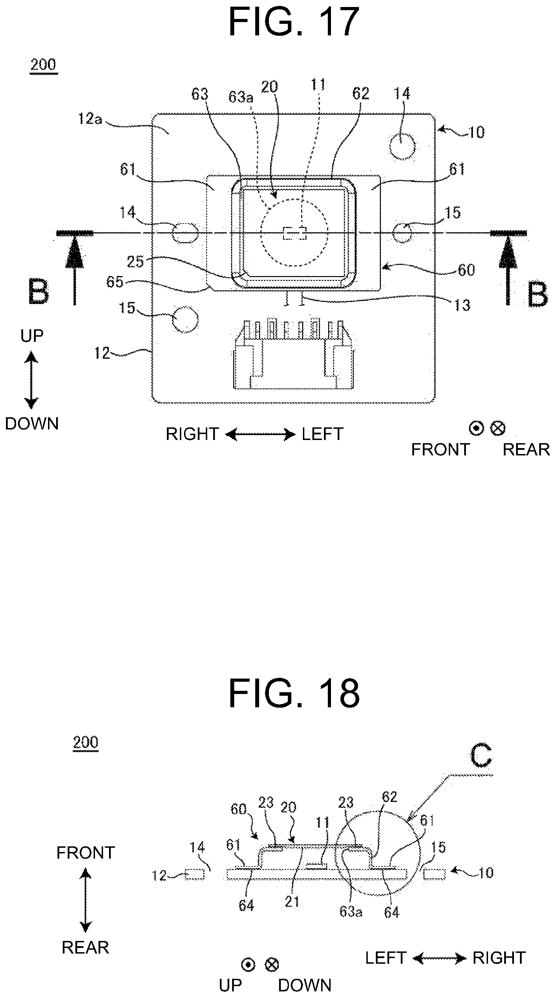

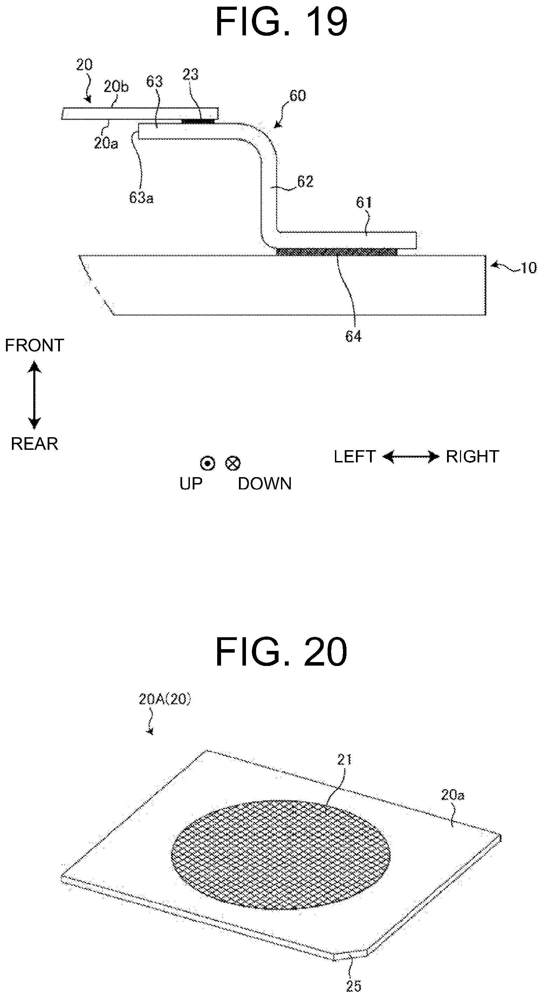

FIGS. 16 to 19 are diagrams illustrating a configuration of a fixing portion of the light source unit 10, the condensing lens 20, and the frame member 60 in the vehicle lamp 200 according to the second embodiment. FIG. 16 is an exploded perspective view, FIG. 17 is a view seen from the axial direction of the optical axis AX, FIG. 18 is a cross-sectional view taken along line B-B in FIG. 17, and FIG. 19 is an enlarged view of a part (portion C) of FIG. 18. As illustrated in FIGS. 16 to 19, the condensing lens 20 is fixed to the substrate 12 via the frame member 60.

The frame member 60 is provided to surround the light source 11. The frame member 60 is manufactured by, for example, performing press working on a material such as a metal plate. The frame member 60 may be formed using a material different from a metallic material.

The frame member 60 includes a base portion 61, a wall portion 62, and a support portion 63. The base portion 61 has a plate shape and is fixed to the substrate 12. The base portion 61 is formed in a rectangular annular shape to surround the light source 11. The base portion 61 is joined to the mounting surface 12a of the substrate 12 via a joining layer 64. The joining layer 64 is formed using, for example, a metallic material such as solder. In this way, the frame member 60 is fixed to the substrate 12 by metal joining. The frame member 60 and the substrate 12 may be joined together by temporary joining using an adhesive or the like in combination.

The joining layer 64 is provided in a state where a part of the periphery of the light source 11 is opened in the substrate 12. According to the present embodiment, the joining layers 64 are provided on the left and right sides of the light source 11. The joining layer 64 is not provided on the upper side and the lower side of the light source 11. That is, the joining layer 64 is provided in a state where the upper side and the lower side of the light source 11 are opened in the substrate 12. A wiring 13 and the like (see FIGS. 15, 16, and the like) connected to the light source 11 is provided in a portion of the substrate 12 in which the joining layer 64 is not provided.

The wall portion 62 protrudes forward from the base portion 61 in the traveling direction of light along the axial direction of the optical axis AX. The wall portion 62 is formed in a rectangular shape to surround the light source 11.

The support portion 63 is provided at a distal end of the wall portion 62 in the protruding direction. The support portion 63 has a plate shape and is provided to cover a portion surrounded by the wall portion 62. The support portion 63 is provided parallel or substantially parallel to the substrate 12. The support portion 63 has an opening 63a. The opening 63a allows the light emitted from the light source 11 to pass through. The opening 63a has, for example, a circular shape, but is not limited to this configuration, and may have another shape.

The condensing lens 20 and the frame member 60 are provided with positioning portions 25, 65 (see FIG. 16 and the like). The positioning portion 25 is provided at one of the four corners of the condensing lens 20. The positioning portion 25 has a configuration in which the corner is cut out. The positioning portion 65 is provided at one of the four corners of the base portion 61 of the frame member 60. The positioning portion 65 has a configuration in which the corner is cut out. The positioning portions 25, 65 are provided, for example, at the corners corresponding to each other. According to the present embodiment, the positioning portions 25, 65 are provided at the lower right corner with respect to the optical axis AX.

By providing the positioning portions 25, 65, it is possible to perform positioning while checking whether the positioning portion 25 and the positioning portion 65 are located at the corresponding positions with respect to the optical axis AX when the condensing lens 20 is fixed to the frame member 60. Therefore, the condensing lens 20 can be located at an appropriate position with respect to the frame member 60. Further, when the frame member 60 is fixed to the substrate 12, it is possible to perform positioning while checking whether the positioning portion 65 is located at an appropriate position. Therefore, the frame member 60 can be located at an appropriate position with respect to the substrate 12.

The condensing lens 20 is joined to the frame member 60 via, for example, a joining layer 23. The joining layer 23 is provided around the meta-surface portion 21 in the incidence surface 20a of the condensing lens 20 when viewed from the axial direction of the optical axis AX. The joining layer 23 is formed using, for example, low-melting-point glass. The joining layer 23 is not limited to the low-melting-point glass and may be formed of other materials such as a metallic material and an adhesive.

FIGS. 20 to 23 are perspective views illustrating an example of the condensing lens 20. FIGS. 20 to 23 illustrate the condensing lens 20 when viewed obliquely from the incidence surface 20a side. The condensing lens 20 (hereinafter, referred to as a condensing lens 20A) illustrated in FIG. 20 has, for example, a rectangular shape. In the condensing lens 20A, the meta-surface portion 21 is formed in a circular range of the incidence surface 20a. The above-described positioning portion 25 is formed at one corner of the condensing lens 20A.

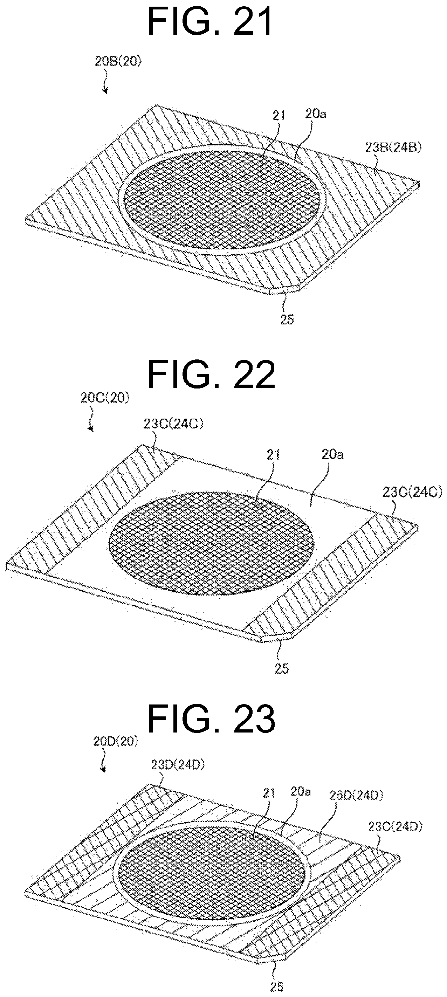

The condensing lens 20 (hereinafter, referred to as a condensing lens 20B) illustrated in FIG. 21 has, for example, a rectangular shape similarly to the condensing lens 20A, the meta-surface portion 21 is formed in a circular range of the incidence surface 20a, and the above-described positioning portion 25 is formed at one corner. In the condensing lens 20B, a joining layer 23B is provided on the incidence surface 20a. The joining layer 23B is provided to surround the meta-surface portion 21 on the incidence surface 20a. The joining layer 23B is provided to be spaced apart from the outer peripheral portion of the meta-surface portion 21. In the condensing lens 20B, the joining layer 23B is provided on substantially the entire surface around the meta-surface portion 21. The joining layer 23B is formed in a thin film shape using a metallic material by, for example, metallic vapor deposition. Solder joining may be performed using the joining layer 23B as a base layer. The joining layer 23B is used as a stray-light suppression portion 24B that blocks light incident on a portion of the condensing lens 20B different from the meta-surface portion 21.

The condensing lens 20 (hereinafter, referred to as a condensing lens 20C) illustrated in FIG. 22 has, for example, a rectangular shape similarly to the condensing lenses 20A and 20B, the meta-surface portion 21 is formed in a circular range of the incidence surface 20a, and the above-described positioning portion 25 is formed at one corner. In the condensing lens 20C, a joining layer 23C is provided on the incidence surface 20a. The joining layer 23C is provided in a band shape along both sides of the meta-surface portion 21 in the right-left direction on the incidence surface 20a. The joining layer 23C is formed in a thin film shape using, for example, a metallic material such as solder. The joining layer 23C is used as a stray-light suppression portion 24C that blocks light incident on a portion of the condensing lens 20C different from the meta-surface portion 21.

The condensing lens 20 (hereinafter, referred to as a condensing lens 20D) illustrated in FIG. 23 has, for example, a rectangular shape similarly to the condensing lenses 20A, 20B, and 20C, the meta-surface portion 21 is formed in a circular range of the incidence surface 20a, and the above-described positioning portion 25 is formed at one corner. In the condensing lens 20D, a joining layer 23D and a coating layer 26D are provided on the incidence surface 20a. The joining layer 23D is provided in a band shape along both sides of the meta-surface portion 21 in the right-left direction on the incidence surface 20a. The joining layer 23D is formed in a thin film shape using, for example, a metallic material such as solder. The coating layer 26D is provided to cover, for example, the entire surface or substantially the entire surface around the meta-surface portion 21 on the incidence surface 20a. The coating layer 26D is formed in a thin film shape using, for example, a coating material. The coating layer 26D may be formed on a portion of the incidence surface 20a other than the portion where the joining layer 23D is provided around the meta-surface portion 21. The joining layer 23D and the coating layer 26D are used as a stray-light suppression portion 24D that blocks light incident on a portion of the condensing lens 20D different from the meta-surface portion 21.

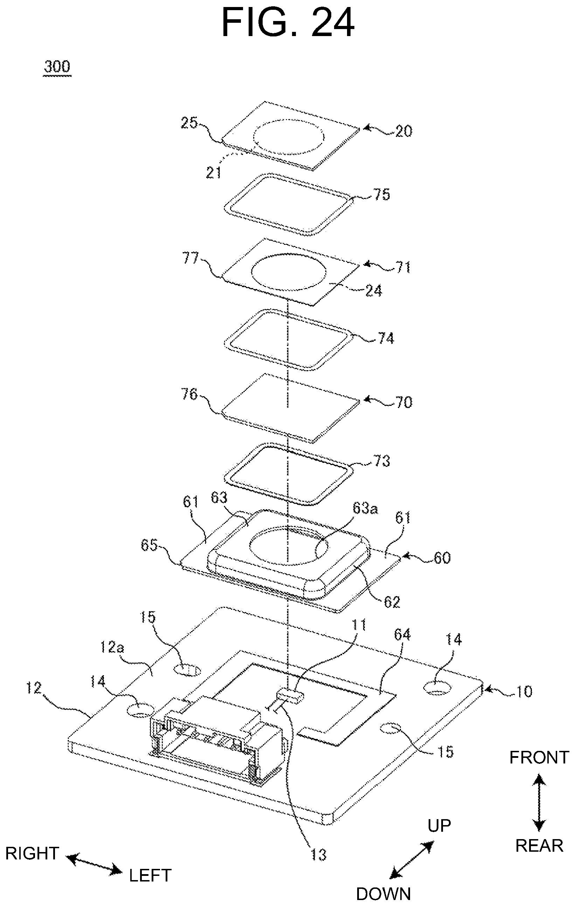

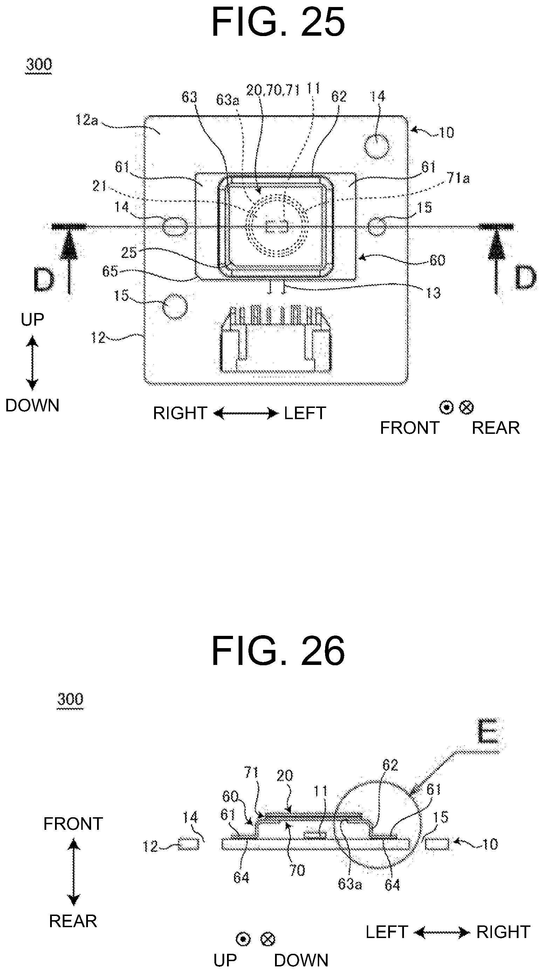

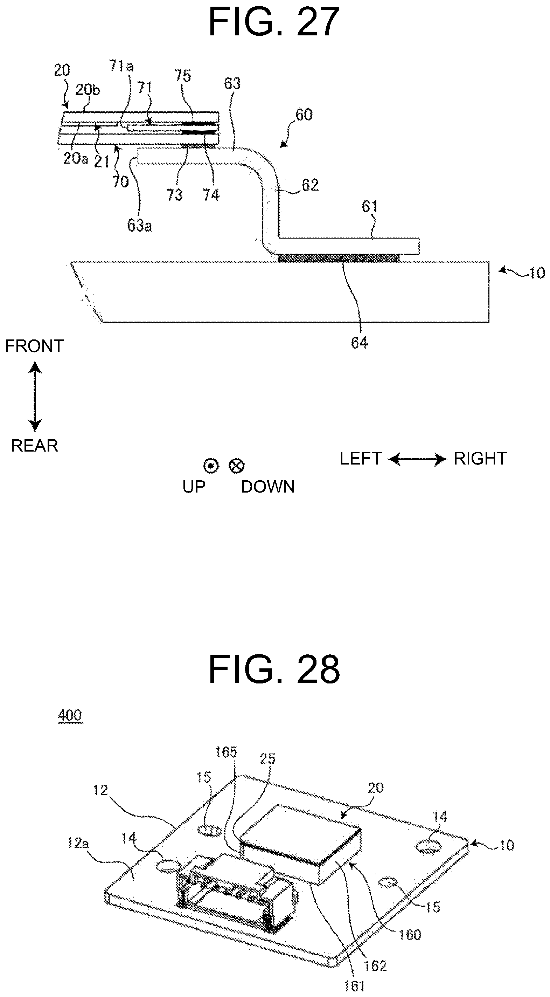

FIGS. 24 to 27 are diagrams illustrating another example of the vehicle lamp according to the second embodiment. Specifically, FIGS. 24 to 27 are diagrams illustrating a configuration of a fixing portion of the light source unit 10, the condensing lens 20, and the frame member 60 in a vehicle lamp 300 according to another example. FIG. 24 is an exploded perspective view, FIG. 25 is a view seen from the axial direction of the optical axis AX, FIG. 26 is a cross-sectional view taken along line D-D in FIG. 25, and FIG. 27 is an enlarged view of a part (portion E) of FIG. 26. As illustrated in FIGS. 24 to 27, in the vehicle lamp 300, the condensing lens 20 is joined to the frame member 60 via a cover member 70. Other configurations of the vehicle lamp 300 are the same as those of the vehicle lamp 200 described above, and thus the description thereof will be omitted or simplified.

The cover member 70 is provided on the incidence surface 20a side with respect to the condensing lens 20 and is provided to cover the meta-surface portion 21. The cover member 70 has, for example, a rectangular plate shape. The cover member 70 is formed to have, for example, the same or substantially the same dimension as the condensing lens 20 when viewed from the axial direction of the optical axis AX.

The cover member 70 allows the light from the light source 11 to pass through to the meta-surface portion 21 side. The cover member 70 may be formed using the same material as the meta-surface portion 21 of the condensing lens 20, or may be formed using the same material as a portion of the condensing lens 20 other than the meta-surface portion 21. The cover member 70 is formed to have a dimension overlapped with the frame member 60 when viewed from the axial direction of the optical axis AX. The cover member 70 is provided with a positioning portion 76 at the portion corresponding to the positioning portion 25 of the condensing lens 20, i.e., at a lower right corner of the optical axis AX.

According to the present embodiment, the cover member 70 is joined to the frame member 60 via a joining layer 73. The joining layer 73 is provided in a region corresponding to the periphery of the meta-surface portion 21 on the incidence surface 20a of the condensing lens 20 when viewed from the axial direction of the optical axis AX. According to the present embodiment, the joining layer 73 is formed in an annular shape along the outer periphery of the cover member 70. The joining layer 73 is formed using, for example, low-melting-point glass. The joining layer 73 is not limited to the low-melting-point glass, and may be formed of another material such as a metallic material or an adhesive.

The cover member 70 is provided to be spaced apart from the meta-surface portion 21 in the axial direction of the optical axis AX. A spacer 71 is provided between the meta-surface portion 21 and the cover member 70. The spacer 71 has, for example, a rectangular plate shape. The spacer 71 has an opening 71a in a range where the meta-surface portion 21 is opened when viewed from the axial direction of the optical axis AX. The spacer 71 is formed such that the outer dimension thereof is the same or substantially the same as those of the condensing lens 20 and the cover member 70 when viewed from the axial direction of the optical axis AX. The dimension of the spacer 71 may not be the same or substantially the same as those of the condensing lens 20 and the cover member 70. The spacer 71 can be formed using, for example, the same material as the condensing lens 20 or the cover member 70. The spacer 71 is provided with a positioning portion 77 at the portion corresponding to the positioning portion 25 of the condensing lens 20 and the positioning portion 76 of the cover member 70, i.e., at a lower right corner of the optical axis AX.

The spacer 71 may be formed using a material that blocks light from the light source 11, such as a metallic material. In this case, the spacer 71 functions as a stray-light suppression portion 24 that blocks light incident on a portion different from the meta-surface portion 21. The stray-light suppression portion 24 may be configured by forming a thin film such as a metal film or a coating film on the surface of the spacer 71.

The spacer 71 is joined to the cover member 70 via a joining layer 74. The spacer 71 is joined to the condensing lens 20 via a joining layer 75. The joining layers 74, 75 are provided in a region overlapped with the joining layer 73, i.e., in the region corresponding to the periphery of the meta-surface portion 21 on the incidence surface 20a of the condensing lens 20, when viewed from the axial direction of the optical axis AX. According to the present embodiment, the joining layers 74, 75 are annularly formed along the outer peripheries of the cover member 70, the spacer 71, and the condensing lens 20. The joining layers 74, 75 are formed using, for example, low-melting-point glass. The joining layers 74, 75 are not limited to the low-melting-point glass, and may be formed of another material such as a metallic material or an adhesive.

According to the present embodiment, the condensing lens 20, the cover member 70, and the spacer 71 are provided in a state of being stacked to overlap in the axial direction of the optical axis AX. With this configuration, the cover member 70 supports the incidence surface 20a of the condensing lens 20 via the spacer 71.

In the vehicle lamp 300, the frame member 60 is provided to surround the light source 11, similarly to the vehicle lamp 200. Further, the joining layer 64 for joining the frame member 60 to the substrate 12 is provided in a state where a part of the periphery of the light source 11 is opened in the substrate 12. The wiring 13 and the like (see FIG. 25 and the like) connected to the light source 11 are provided in a portion of the substrate 12 where the joining layer 64 is not provided.

According to the present embodiment, the spacer 71 may be omitted. In this case, a part of the cover member 70 may protrude to the incidence surface 20a side of the condensing lens 20, and the condensing lens 20 may be supported in a state where the protruding portion is in contact with the incidence surface 20a.

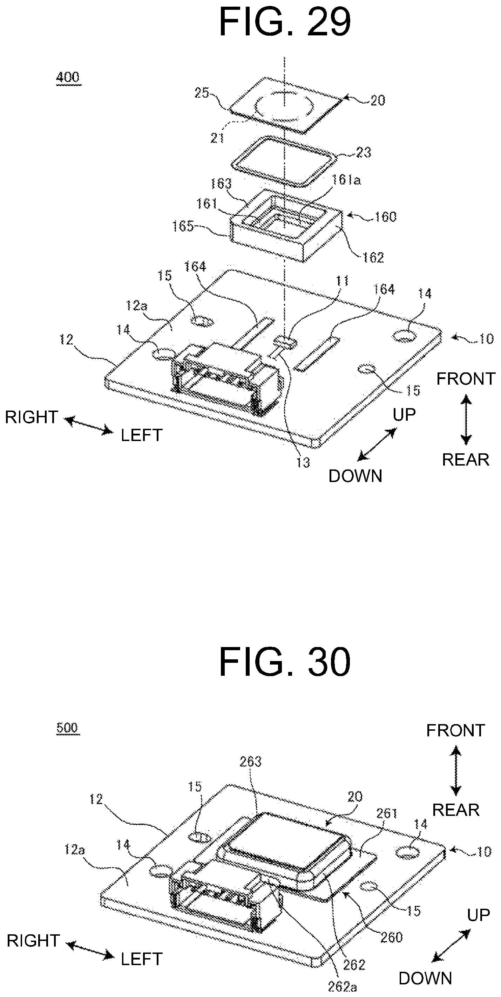

FIGS. 28 and 29 are diagrams illustrating another example of the vehicle lamp according to the second embodiment. Specifically, FIGS. 28 and 29 are diagrams illustrating a configuration of a fixing portion of the light source unit 10, the condensing lens 20, and a frame member 160 in a vehicle lamp 400 according to another example. FIG. 28 is a perspective view, and FIG. 29 is an exploded perspective view.

In the vehicle lamp 400 illustrated in FIGS. 28 and 29, the frame member 160 is formed of ceramic. The frame member 160 includes a base portion 161 and a wall portion 162. The base portion 161 has a plate shape and is fixed to the substrate 12. The base portion 161 is formed in a rectangular annular shape to surround the light source 11. The base portion 161 has an opening 161a. The opening 161a allows the light emitted from the light source 11 to pass through. The opening 161a has, for example, a rectangular shape, but is not limited to this configuration, and may have another shape such as a circular shape. The base portion 161 is joined to the substrate 12 via a joining layer 164. The joining layer 164 is formed using, for example, a metallic material such as solder. The frame member 160 and the substrate 12 may be joined together by temporary joining using an adhesive or the like in combination.

The joining layer 164 is provided in a state where a part of the periphery of the light source 11 is opened in the substrate 12. According to the present embodiment, the joining layers 164 are provided on the left and right sides of the light source 11. The joining layer 164 is not provided on the upper side and the lower side of the light source 11. That is, the joining layer 164 is provided in a state where the upper side and the lower side of the light source 11 are opened in the substrate 12. The wiring 13 and the like (see FIG. 29 and the like) connected to the light source 11 are provided in a portion of the substrate 12 where the joining layer 164 is not provided.

The wall portion 162 protrudes forward from the base portion 161 in the traveling direction of light along the axial direction of the optical axis AX. The wall portion 162 is formed in a rectangular shape to surround the light source 11. A planar support portion 163 is formed at an end portion of the wall portion 162 in the protruding direction. The support portion 163 is formed to be parallel or substantially parallel to the substrate 12. The support portion 163 supports the condensing lens 20. The wall portion 162 is provided with a positioning portion 165 at the portion corresponding to the positioning portion 25 of the condensing lens 20, i.e., at a lower right corner of the optical axis AX.

By providing the frame member 160 using ceramic, it is possible to suppress the installation area of the frame member 160 in the substrate 12. Further, the frame member 160 has a linear expansion coefficient smaller than that of a frame member using metal, and the difference in the linear expansion coefficient between the frame member 160 and the condensing lens 20 is small. This increases the reliability of the joining between the frame member 160 and the condensing lens 20. Further, since the frame member 160 has a high electrical insulation property as compared with a frame member using metal, the frame member 160 does not electrically interfere with a conductor pattern such as wiring formed on the substrate 12. This increases the flexibility in designing the conductor pattern on the substrate 12. Furthermore, since the frame member 160 has a higher heat dissipation efficiency than a frame member using metal, the heat dissipation of the substrate 12 can be improved.

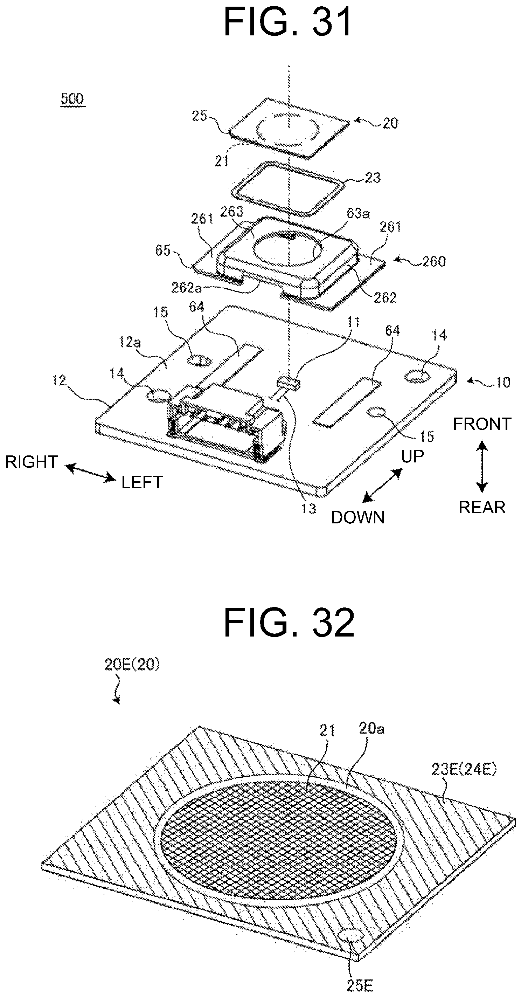

FIGS. 30 and 31 are diagrams illustrating another example of the vehicle lamp according to the second embodiment. Specifically, FIGS. 30 and 31 are diagrams illustrating a configuration of a fixing portion of the light source unit 10, the condensing lens 20, and a frame member 260 in a vehicle lamp 500 according to another example. FIG. 30 is a perspective view, and FIG. 31 is an exploded perspective view.

As illustrated in FIGS. 30 and 31, the frame member 260 includes a base portion 261, a wall portion 262, and a support portion 263. The base portion 261 and the support portion 263 have the same configuration as the base portion 61 and the support portion 63 of the frame member 60 described above. Further, according to the present embodiment, the wall portion 262 is configured to include a ventilation portion 262a in addition to the configuration of the wall portion 62 described above. The ventilation portion 262a communicates between the inner peripheral side and the outer peripheral side of the frame member 260. By providing the ventilation portion 262a, the heat generated by the light source 11 can be efficiently radiated to the outside of the frame member 260 due to convection.

FIG. 32 is a perspective view illustrating a configuration of a condensing lens 20E according to a modification. As illustrated in FIG. 32, the condensing lens 20E has, for example, a rectangular shape similarly to the above-described condensing lens 20B (see FIG. 21), the meta-surface portion 21 is formed in a circular range of the incidence surface 20a, and a joining layer 23E is provided on the incidence surface 20a. Similarly to the joining layer 23B of the condensing lens 20B, the joining layer 23E is formed in a thin film shape using a metallic material such as metallic vapor deposition on substantially the entire surface around the meta-surface portion 21 of the incidence surface 20a. The joining layer 23E is used as a stray-light suppression portion 24E that blocks light incident on a portion of the condensing lens 20B different from the meta-surface portion 21. Unlike the joining layer 23B of the condensing lens 20B, the joining layer 23E is provided with an opening 25E at the position corresponding to one corner. The opening 25E can be used as a positioning portion that positions the condensing lens 20E.

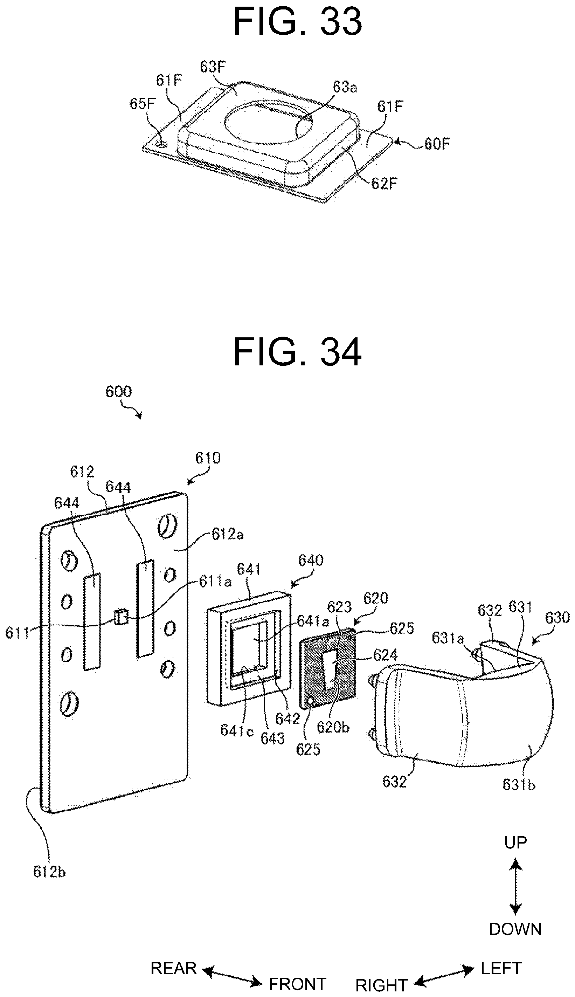

FIG. 33 is a perspective view illustrating a configuration of a frame member 60F according to a modification. As illustrated in FIG. 33, the frame member 60F includes a base portion 61F, a wall portion 62F, and a support portion 63F, similarly to the above-described frame member 60. The wall portion 62F and the support portion 63F are the same as the wall portion 62 and the support portion 63 of the frame member 60. The base portion 61F has a configuration in which an opening 65F is provided in addition to the configuration of the base portion 61 of the frame member 60. The opening 65F is provided at the position corresponding to one corner of the base portion 61F. The opening 65F can be used as a positioning portion that positions the frame member 60F.

As described above, the vehicle lamp 200 according to the present embodiment includes the light source 11 that emit light, the condensing lens 20 that condenses the light emitted from the light source 11, and the projecting lens 40 that emits the light condensed by the condensing lens 20 to form the irradiation pattern P, the condensing lens 20 has a flat plate shape having the incidence surface 20a on which the light is incident from the light source 11 and the emission surface 20b from which the light incident from the incidence surface 20a is emitted, and has, on the incidence surface 20a, the meta-surface portion 21 that converts a wavefront of the light from the light source 11 into a curved wavefront in a converging direction, and the vehicle lamp 200 further includes the stray-light suppression portion 24 that blocks the light incident on a portion of the condensing lens 20 other than the meta-surface portion 21.

With this configuration, the condensing lens 20 has a flat plate shape having the incidence surface 20a and the emission surface 20b and includes, on the incidence surface 20a, the meta-surface portion 21 that converts the wavefront of the light from the light source 11 into a curved wavefront in the converging direction; thus, the thickness can be reduced as compared with a case where a convex lens is used. This makes it possible to adopt the configuration in which the position of the emission surface 20b is provided on the light source 11 side and to reduce the converging angle T to the light-blocking member 30. Therefore, since the irradiation pattern P can be formed without using a portion of the projecting lens 40 which is greatly affected by aberration, it is possible to suppress the deterioration of the appearance of the irradiation pattern P. Further, since the stray-light suppression portion 24 can block the light incident on a portion of the condensing lens 20 different from the meta-surface portion 21, it is possible to suppress the light emitted from the condensing lens 20 from becoming stray light.

In the vehicle lamp 200 according to the present embodiment, the stray-light suppression portion 24 is provided in the condensing lens 20. With this configuration, it is possible to more reliably block the light incident on a portion of the condensing lens 20 different from the meta-surface portion 21.

In the vehicle lamp 200 according to the present embodiment, the stray-light suppression portion 24 is provided around the meta-surface portion 21 on the incidence surface 20a of the condensing lens 20. With this configuration, it is possible to more reliably block the light incident on a portion of the condensing lens 20 different from the meta-surface portion 21.

The vehicle lamp 200 according to the present embodiment further includes the substrate 12 on which the light source 11 is mounted and the frame member 60 that is fixed to the substrate 12 and supports the condensing lens 20, and the condensing lens 20 is joined to the frame member 60 via the joining layer 23, and the stray-light suppression portion 24 includes at least a part of the joining layer 23. With this configuration, at least a part of the joining layer 23 can be used as the stray-light suppression portion 24, and thus efficient manufacturing can be achieved.

The vehicle lamp 300 according to the present embodiment further includes the cover member 70 that supports the incidence surface 20a of the condensing lens 20, covers the meta-surface portion 21, and allows the light from the light source 11 to pass through to the meta-surface portion 21 side and the spacer 71 provided between the cover member 70 and the incidence surface 20a, and the stray-light suppression portion 24 is provided in the spacer 71. With this configuration, it is possible to more reliably block the light incident on a portion of the condensing lens 20 different from the meta-surface portion 21.

The vehicle lamps 200, 300, 400, and 500 according to the present embodiment further include the light-blocking member 30 including the slit 33 that allows a part of the light condensed by the condensing lenses 20 to 20E to pass through, the projecting lens 40 irradiates a road surface with the light having passed through the slit 33 to form the irradiation pattern **P,** and the stray-light suppression portion 24 is provided between the light source 11 and the light-blocking member 30. With this configuration, it is possible to suppress the deterioration of the appearance of the irradiation pattern P formed on the road surface. Further, it is possible to more reliably suppress the light emitted from the condensing lens 20 from becoming stray light between the light source 11 and the light-blocking member 30.

The technical scope of the present disclosure is not limited to the above-described embodiment, and appropriate modifications can be made without departing from the spirit of the present disclosure. For example, in the above-described embodiment, the configuration in which the vehicle lamp 200 is provided in the front portion of the vehicle M has been described as an example, but this is not a limitation. The vehicle lamp 200 may be configured to be provided in a rear portion or a side portion of the vehicle M, and may be configured to form the irradiation pattern on a road surface behind or beside the vehicle M. Further, in the vehicle lamps 200, 300, 400, and 500 according to the present embodiment, the configuration in which the irradiation pattern P is formed on the road surface has been described as an example, but this is not a limitation. For example, the technology of the present disclosure can also be applied to the configuration in which the irradiation pattern is formed at a place other than the road surface in front of or behind the vehicle M.

### <Third Embodiment>

A vehicle lamp according to a third embodiment of the present invention will be described below with reference to the drawings. The present invention is not limited to the embodiment. Further, components in the following embodiment include components that can be easily replaced by those skilled in the art or substantially the same components.

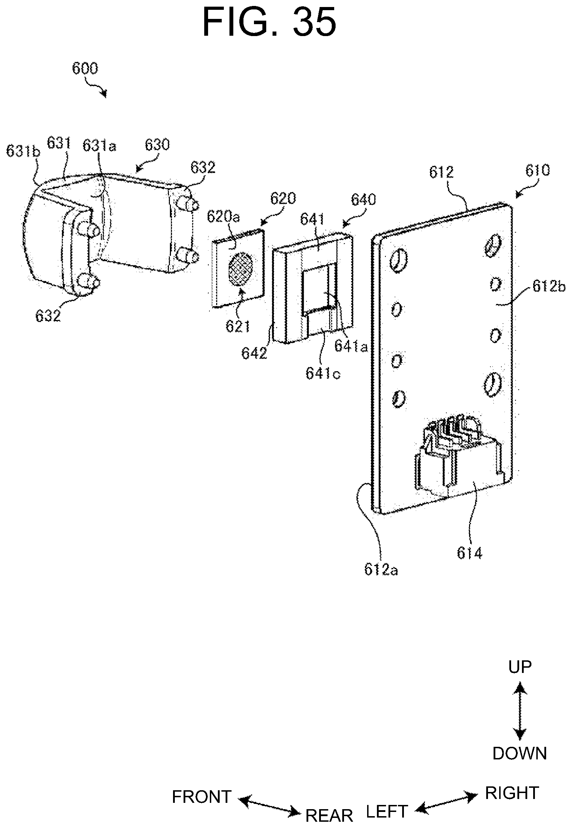

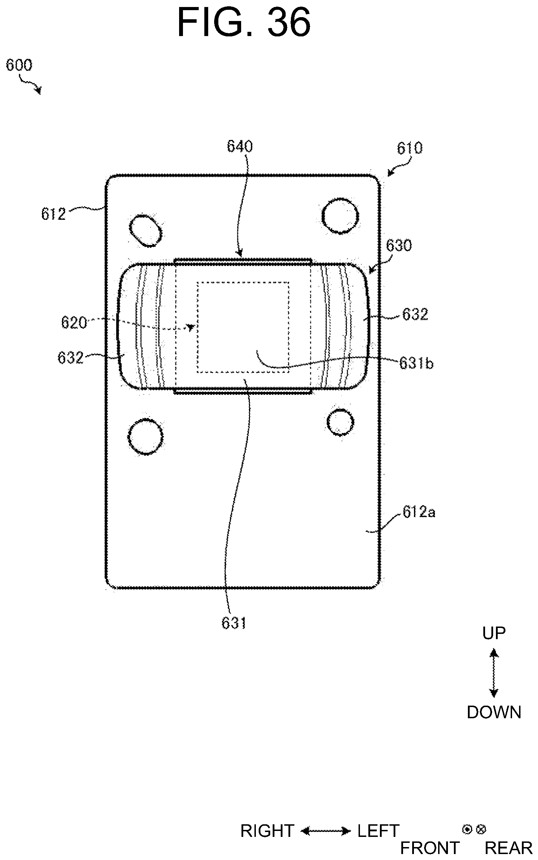

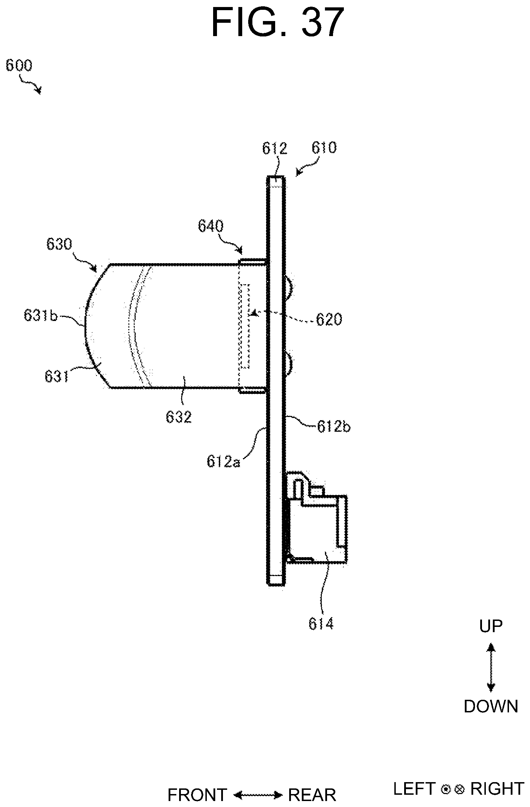

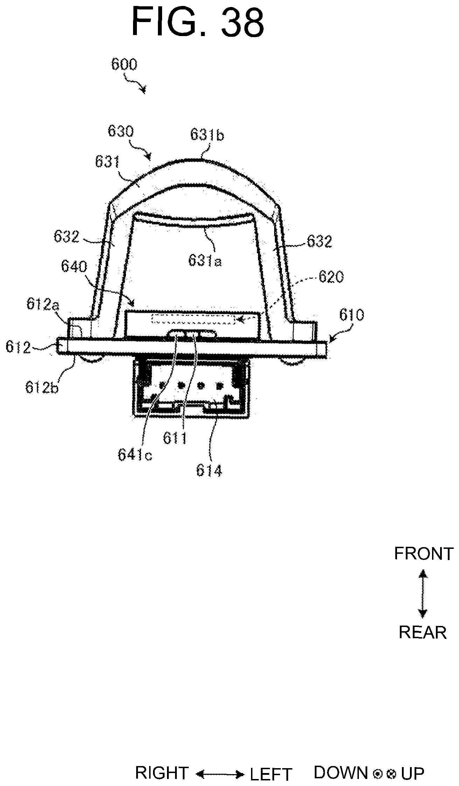

FIGS. 34 and 35 are exploded perspective views illustrating an example of a vehicle lamp 600 according to a third embodiment. FIG. 34 illustrates a state obliquely viewed from the front side, and FIG. 35 illustrates a state obliquely viewed from the rear side. FIGS. 36 and 38 are diagrams illustrating an example of a state in which the vehicle lamp 600 according to the third embodiment is assembled. FIG. 36 illustrates a state viewed from the front side, FIG. 37 illustrates a state viewed from the left side, and FIG. 38 illustrates a state viewed from the lower side. As illustrated in FIGS. 34 to 38, the vehicle lamp 600 includes a light source unit 610, a light source-side lens 620, a projecting lens 630, and a frame member 640.

The light source unit 610 includes a light source 611 and a substrate (light source substrate) 612. The light source 611 is, for example, a semiconductor-type light source such as an LED. The light source 611 has a light emission surface 611a that emits light. The light emission surface 611a is provided to face an incidence surface 620a of the light source-side lens 620. The light source 611 emits light of a single color, e.g., orange (amber) light from the light emission surface 611a. For example, the one light source 611 is provided. The plurality of light sources 611 may be provided. Further, the color of light emitted from the light emission surface 611a is not limited to orange.

The substrate 612 has a mounting surface 612a. The light source 611 is mounted on the mounting surface 612a. The substrate 612 has a connector surface 612b on the side opposite to the mounting surface 612a. A connector 614 is connected to the connector surface 612b. A wiring, a circuit, and the like, for supplying power to the light source 611 are formed on the substrate 612. The substrate 612 is provided with a through-hole that penetrates the mounting surface 612a and the connector surface 612b. The mounting surface 612a and the connector surface 612b are electrically connected to each other via the through-hole.

The light source-side lens 620 emits light from the light source 611 toward the projecting lens 630. The light source-side lens 620 is formed in a plate shape such as a flat plate shape by using a light-permeable material such as quartz glass. The thickness (dimension in the front-rear direction) of the light source-side lens 620 can be set to, for example, 0. 3 mm or more and 1. 5 mm or less.

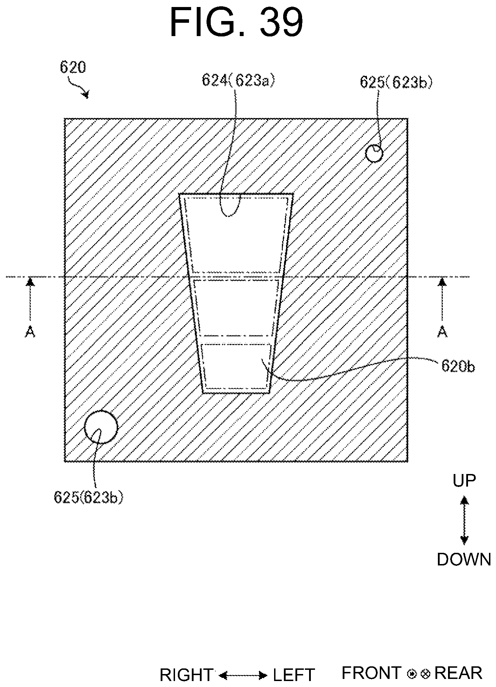

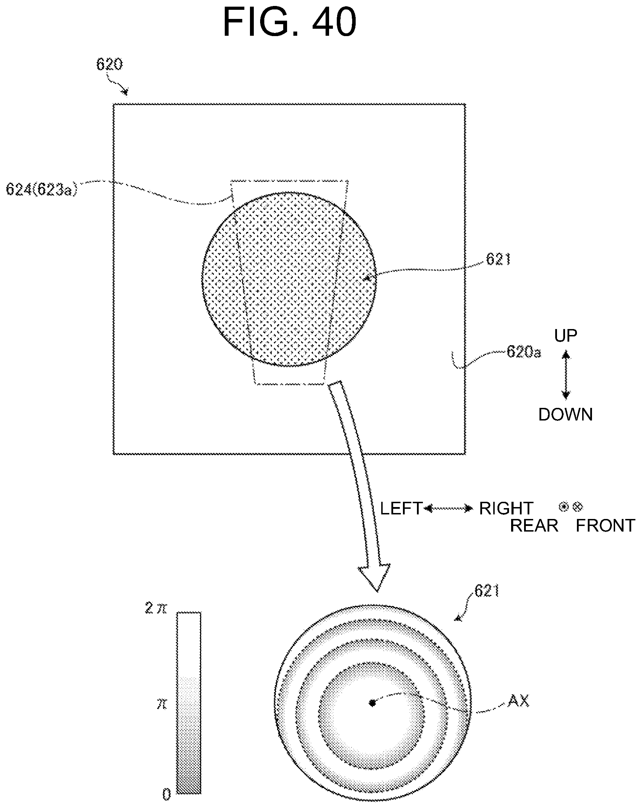

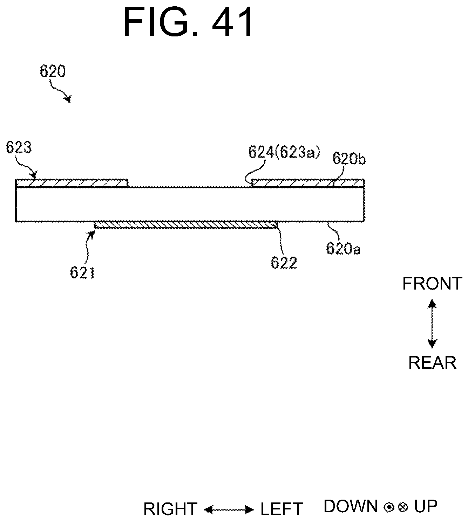

FIGS. 39 to 41 are diagrams illustrating an example of the light source-side lens 620 according to the third embodiment. FIG. 39 is a view seen from the front side (the projecting lens 630 side), FIG. 40 is a view seen from the rear side (the light source unit 610 side), and FIG. 41 is a diagram illustrating a configuration in the cross-sectional view taken along the line A-A in FIG. 39. As illustrated in FIGS. 39 to 41, the light source-side lens 620 has the incidence surface 620a and the emission surface 620b. The incidence surface 620a and the emission surface 620b are, for example, planar. The incidence surface 620a and the emission surface 620b may be curved surfaces. The light source-side lens 620 is provided such that the incidence surface 620a faces the light source 611 side and the emission surface 620b faces the projecting lens 630 side.

The light source-side lens 620 is what is called a meta-lens including a meta-surface portion 621 on the incidence surface 620a. The meta-surface portion 621 converts an incident wavefront from the light source 611 toward a slit 624 described below. The meta-surface portion 621 is formed using, for example, gallium nitride (GaN), silicone nitride (Si3N4), or the like. By the action of the meta-surface portion 621 provided on the incidence surface 620a, the wavefront of the light incident from the incidence surface 620a is converted toward the emission surface 620b, and the light with a converted wavefront reaches the emission surface 620b. The light having reached a light-blocking portion 623 described below on the emission surface 620b is blocked by the light-blocking portion 623, and the light having reached a slit 624 passes through the slit 624 and is emitted from the emission surface 620b. With regard to the horizontal direction, the light emitted from the emission surface 620b is condensed to converge on the optical axis AX side, as in the case where the light is emitted from the lens surface of a convex lens, and, with regard to the vertical direction, from the upper portion to the lower portion of the emission surface 620b, the light is diffused from the horizontal direction to the lower side.

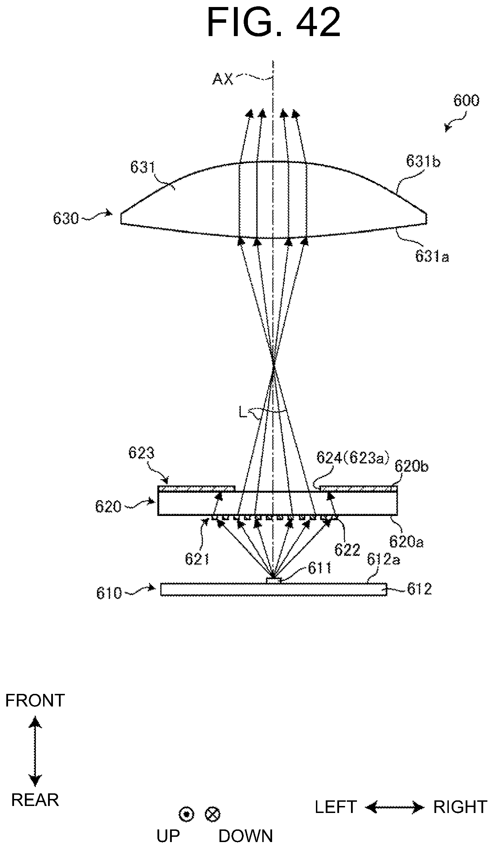

The meta-surface portion 621 includes a plurality of pillar portions 622 (see FIG. 42). The pillar portion 622 has a columnar shape and protrudes from the incidence surface 620a toward the light source 611. The plurality of pillar portions 622 is arranged in a matrix at a predetermined pitch along, for example, the right-left direction and the front-rear direction. The plurality of pillar portions 622 may be arranged in a circular shape or may be arranged in a concentric shape. Each of the plurality of pillar portions 622 has a dimension in for example either the front-rear direction or the right-left direction that is equal to or less than twice the wavelength of the light emitted from the light source 611. In this manner, setting the dimension of the plurality of pillar portions 622 in either the front-rear direction or the right-left direction to be equal to or less than twice the wavelength of the light from the light source 611 can result in higher stability with respect to the phase, easier manufacturing, and thus a reduction in costs.

The plurality of pillar portions 622 can be formed by a technique such as an electron beam lithography method, a nanoimprint method, or an ion etching method. In the light source-side lens 620, the meta-surface portion 621 and portions other than the meta-surface portion 621 may be made of materials having different dielectric constants and magnetic permeabilities.

The meta-surface portion 621 is formed in, for example, a circular shape when viewed from the light source 611 side (see FIG. 40 and the like). In the meta-surface portion 621, the phase distribution is set such that the phase periodically changes in a concentric fashion in the radial direction from the circular region including the optical axis AX of the light source-side lens 620 (see the broken line portion in FIG. 40). The center of the concentric circle and the optical axis AX may be shifted, for example, in the vertical direction. In each period of the phase distribution, the diameter of the pillar portion 622 can be set to gradually decrease as the phase decreases. The meta-surface portion 621 is provided so that the ratio between the diameter of the light emission range on the light emission surface 611a of the light source 611 and the diameter of the meta-surface portion 621 is, for example, 1:4. For example, when the light emission surface 611a has a vertical dimension of 1 mm and a horizontal dimension of 1 mm, the diameter of the light emission range is 1 mm. In this case, the diameter of the meta-surface portion 621 can be set to about 4 mm. In FIG. 40, an example of the position, the dimension, and the range of the slit 624 when viewed from the axial direction of the optical axis AX is indicated by a dash-dotted line. In the example illustrated in FIG. 40, the meta-surface portion 621 has a dimension in the lateral direction (horizontal direction) of the slit 624 described below larger than that of the slit 624. The meta-surface portion 621 has a dimension in the longitudinal direction (vertical direction) of the slit 624 smaller than that of the slit 624. In other words, when viewed from the axial direction of the optical axis AX, the meta-surface portion 621 is formed in a range protruding from the slit 624 in the horizontal direction and is formed in a range inside the slit 624 in the vertical direction.

The light source-side lens 620 includes the light-blocking portion 623 on the emission surface 620b. The light-blocking portion 623 is formed in a thin film shape using a metallic material, for example. The light-blocking portion 623 can be formed by various methods such as printing, lamination, and vapor deposition. The light-blocking portion 623 includes a first opening 623a and a second opening 623b. In the light source-side lens 620, the emission surface 620b is covered with the light-blocking portion 623. Further, in the light source-side lens 620, the emission surface 620b is in an exposed state in portions where the first opening 623a and the second opening 623b are formed.

The first opening 623a forms the slit 624. The slit 624 allows a part of the light with a wavefront converted by the meta-surface portion 621 to pass through. The slit 624 is formed in the state of extending in the vertical direction, for example. The number and arrangement of the slits 624 are not limited to those described above. For example, the slits 624 may be formed in a state in which the three slits 624 are arranged in the vertical direction as indicated by the dash-dotted line in FIG. 39. As described above, according to the present embodiment, the light-blocking portion 623 including the slit 624 is provided in the light source-side lens 620. In other words, the light source-side lens 620 has a light-blocking function to allow a part of the light with a converted wavefront to pass through. Therefore, it is not necessary to separately provide a light-blocking member.

The second opening 623b forms a positioning portion 625. The positioning portion 625 is provided on at least one of the four corners of the light source-side lens 620. According to the present embodiment, the two positioning portions 625 in total are provided, one at each opposing corner. The number, dimension, and arrangement of the positioning portions 625 are not limited to those described above. By providing the positioning portion 625, when the light source-side lens 620 is fixed to the frame member 640, it is possible to perform positioning while confirming whether the positioning portion 625 is located at the corresponding position with respect to the optical axis AX by image recognition or the like. Therefore, the light source-side lens 620 can be located at an appropriate position with respect to the frame member 640.

Returning back to FIGS. 34 to 38, the projecting lens 630 includes a lens portion 631 and a leg portion 632. The lens portion 631 projects the light having passed through the slit 624 onto the road surface in front of the vehicle to form an irradiation pattern. In the projecting lens 630, the lens portion 631 and the leg portion 632 are formed as a single member. The projecting lens 630 may have a configuration in which the lens portion 631 and the leg portion 632 are formed as separate members. The lens portion 631 is formed using a material capable of transmitting light from the light source 611. Examples of such a material include a resin material such as acrylic, but other materials may be used.

The lens portion 631 has an incidence surface 631a and an emission surface 631b (see FIG. 38). Light having passed through the slit 624 is incident on the incidence surface 631a. The emission surface 631b emits forward the light incident from the incidence surface 631a. The leg portions 632 are provided on both sides of the lens portion 631 in the right-left direction. The leg portion 632 is fixed to the substrate 612.

The frame member 640 includes a base portion 641 and a wall portion 642. The base portion 641 has a plate shape and is fixed to the substrate 612. The base portion 641 is formed in a rectangular annular shape to surround the light source 611. The base portion 641 has an opening 641a. The opening 641a allows the light emitted from the light source 611 to pass through. The opening 641a has, for example, a rectangular shape, but is not limited to this configuration, and may have another shape such as a circular shape. The base portion 641 is joined to the substrate 612 via a joining layer 644. The joining layer 644 is formed using, for example, a metallic material such as solder. The frame member 640 and the substrate 612 may be joined together by temporary joining using an adhesive or the like in combination.

The joining layer 644 is provided in a state where a part of the periphery of the light source 611 is opened in the substrate 612. According to the present embodiment, the joining layers 644 are provided on the left and right sides of the light source 611. The joining layer 644 is not provided on the upper side and the lower side of the light source 611. That is, the joining layer 644 is provided in a state where the upper side and the lower side of the light source 611 are opened in the substrate 612. A wiring or the like connected to the light source 611 may be provided in a portion of the substrate 612 where the joining layer 644 is not provided.

The wall portion 642 protrudes forward from the base portion 641 in the traveling direction of light along the axial direction of the optical axis AX. The wall portion 642 is formed in a rectangular shape to surround the light source 611. A planar support portion 643 is formed at an end portion of the wall portion 642 in the protruding direction. The support portion 643 is formed parallel or substantially parallel to the substrate 612. The support portion 643 supports the light source-side lens 620. The wall portion 642 is configured to include a ventilation portion 641c (see FIGS. 35 and 38). The ventilation portion 641c communicates between the inner peripheral side and the outer peripheral side of the frame member 640. By providing the ventilation portion 641c, the heat generated by the light source 611 can be efficiently radiated to the outside of the frame member 640 due to convention. The ventilation portion 641c can be provided to open a space for wiring formed on the mounting surface 612a of the substrate 612 in a state where the frame member 640 is fixed to the substrate 612. In this case, interference between the wiring formed on the mounting surface 612a and the frame member 640 can be avoided.

The frame member 640 is formed using, for example, ceramic. The frame member 640 may be formed using metal. According to the present embodiment, by providing the frame member 640 using ceramic, the installation area of the frame member 640 on the substrate 612 can be suppressed. Further, the frame member 640 has a linear expansion coefficient smaller than that of a frame member using metal, and the difference in the linear expansion coefficient between the frame member 640 and the light source-side lens 620 is small. This increases the reliability of the joining between the frame member 640 and the light source-side lens 620. Further, since the frame member 640 has a high electrical insulation property as compared with a frame member using metal, the frame member 640 does not electrically interfere with a conductor pattern such as wiring formed on the substrate 612. This increases the flexibility in designing the conductor pattern on the substrate 612. Furthermore, since the frame member 640 has a higher heat dissipation efficiency than a frame member using metal, the heat dissipation of the substrate 612 can be improved.

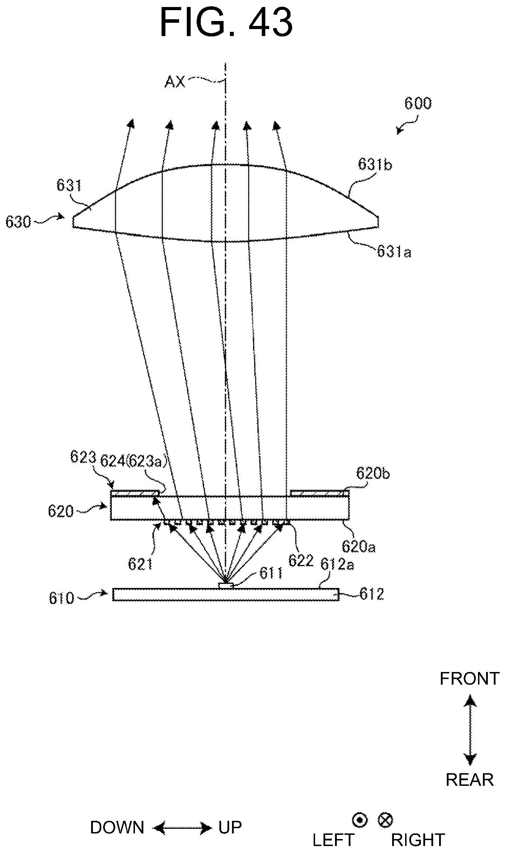

FIGS. 42 and 43 are diagrams illustrating an example of an operation of the vehicle lamp 600 according to the third embodiment. The vehicle lamp 600 emits light from the light emission surface 611a of the light source 611 in response to an operation of a direction indicator, or the like, by a driver or in conjunction with lighting of a hazard lamp or the like.

The light L emitted from the light emission surface 611a is incident on the incidence surface 620a of the light source-side lens 620, and the wavefront of the light L is converted toward the emission surface 620b by the action of the meta-surface portion 621 provided on the incidence surface 620a. As illustrated in FIG. 42, with regard to the horizontal direction, the light L with a converted wavefront reaches the emission surface 620b in a state of being condensed on the optical axis AX side. Further, as illustrated in FIG. 43, with regard to the vertical direction, the light L with a converted wavefront reaches the emission surface 620b such that the light is diffused to the lower side and the diffusion of the light to the upper side is suppressed. According to the present embodiment, the light L reaches the uppermost portion of the emission surface 620b in the vertical direction in a state of being parallel or substantially parallel to the optical axis AX. As illustrated in FIGS. 42 and 43, a part of the light L having reached the emission surface 620b passes through the slit 624 of the light-blocking portion 623, and the rest is blocked by the light-blocking portion 623. The light L having passed through the slit 624 is incident on the incidence surface 631a of the lens portion 631 of the projecting lens 630 and is emitted from the emission surface 631b to the front side of the vehicle.

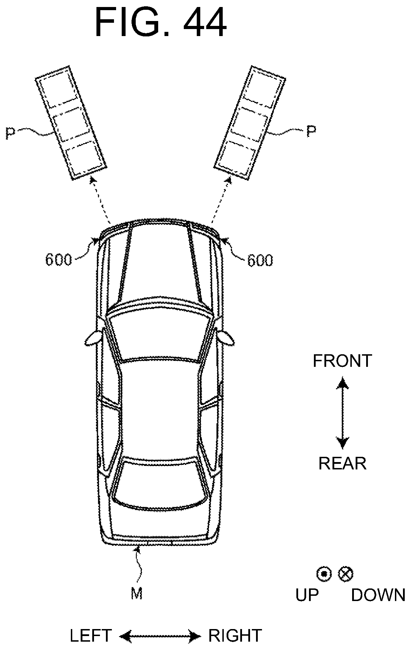

FIG. 44 is a diagram illustrating an example of an irradiation pattern formed on a road surface by the vehicle lamp 600. As illustrated in FIG. 44, the irradiation pattern P is formed on the road surface in front of the vehicle with the light L emitted to the front side of the vehicle. When the slit 624 has a shape in which the plurality of slits 624 is arranged in the vertical direction, the plurality of irradiation patterns P is also formed in a state of being arranged in the front-rear direction (see the dash-dotted line in FIG. 44).

In the vehicle lamp 600 according to the present embodiment, the light source-side lens 620 has a flat plate shape, and the meta-surface portion 621 is provided on the incidence surface 620a. Therefore, the thickness can be reduced as compared with the case where a convex lens is used. Thus, the converging angle can be reduced as compared with the case where a convex lens is used. **In** this case, the light L having passed through the slit 624 does not reach the outer peripheral side of the incidence surface 631a of the projecting lens 630. Therefore, the irradiation pattern P can be formed without using a portion of the projecting lens 630 that is greatly affected by aberration. Accordingly, the irradiation pattern P can be clearly formed.

As described above, the vehicle lamp 600 according to the present embodiment includes the light source 611 that emits light, the light source-side lens 620 that includes the incidence surface 620a on which the light is incident from the light source 611, the meta-surface portion 621 that is provided on the incidence surface 620a and converts a wavefront of the light, the emission surface 620b that emits the light with a converted wavefront, and the light-blocking portion 623 that is provided on the emission surface 620b and includes the slit 624 that allows a part of the light to pass through, and the projecting lens 630 that emits the light having passed through the slit 624 in the light source-side lens 620 to form the irradiation pattern P.

With this configuration, since the light-blocking portion 623 including the slit 624 is provided integrally with the light source-side lens 620, it is not necessary to separately provide a light-blocking member. Therefore, the number of components of the vehicle lamp 600 can be reduced. Further, when the vehicle lamp 600 is assembled, it is not necessary to align the light source-side lens 620 and the light-blocking member. Accordingly, it is possible to reduce a burden at the time of assembling the vehicle lamp 600.

In the vehicle lamp 600 according to the present embodiment, the light-blocking portion 623 is formed in a thin film shape using a metallic material. With this configuration, the light-blocking portion 623 can be easily formed on the light source-side lens 620 by forming the light-blocking portion 623 in a thin film shape using a metallic material.

In the vehicle lamp 600 according to the present embodiment, the light-blocking portion 623 has the first opening 623a forming the slit 624. With this configuration, when the light-blocking portion 623 is formed in the light source-side lens 620, the slit 624 can be easily formed by forming the first opening 623a by patterning or the like.

The vehicle lamp 600 according to the present embodiment further includes the substrate 612 on which the light source 611 is mounted and the frame member 640 fixed to the substrate 612, the light source-side lens 620 is supported by the frame member 640, and the positioning portion 625 is provided on at least either the light source-side lens 620 or the frame member 640. With this configuration, since the light source-side lens 620 is supported by the substrate 612 via the frame member 640, it is possible to stably support the light source-side lens 620. Further, when the size of the light source-side lens 620 and the relative position between the light source-side lens 620 and the light source 611 are changed, the frame member 640 may be changed, and therefore, it is possible to easily cope with various types. Further, by providing the positioning portion 625, it is possible to increase the positional accuracy of at least either the light source-side lens 620 or the frame member 640 at the time of assembly.

In the vehicle lamp 600 according to the present embodiment, the light-blocking portion 623 has the second opening 623b corresponding to the positioning portion 625. With this configuration, when the light-blocking portion 623 is formed in the light source-side lens 620, the positioning portion 625 can be easily formed by forming the second opening 623b by patterning or the like.

In the vehicle lamp 600 according to the present embodiment, the substrate 612 has the mounting surface 612a on which the light source 611 is mounted, the frame member 640 is fixed to the mounting surface 612a, and the vehicle lamp 600 further includes the connector 614 that is provided on the connector surface 612b opposite to the mounting surface 612a of the substrate 612 and is connected to the outside. With this configuration, by providing the connector 614 on the connector surface 612b opposite to the mounting surface 612a of the substrate 612, the space corresponding to the connector 614 can be provided on the mounting surface 612a side. Thus, it is possible to suppress interference with other constituent members constituting the vehicle lamp 600. Examples of the other constituent members include constituent members of the other functional lamp in a case where the other functional lamp is provided in the vehicle lamp 600.

In the vehicle lamp 600 according to the present embodiment, the one light source 611 is provided. With this configuration, since the number of light sources 611 is one, it is possible to reduce power consumption and the amount of heat generation.

In the vehicle lamp 600 according to the present embodiment, the meta-surface portion 621 has a dimension in the lateral direction (horizontal direction) of the slit 624 larger than that of the slit 624 and a dimension in the longitudinal direction (vertical direction) of the slit 624 smaller than that of the slit 624. With this configuration, the light condensed in the lateral direction of the slit 624 by the meta-surface portion 621 and diffused in the longitudinal direction of the slit 624 can efficiently pass through the slit 624.

The technical scope of the present disclosure is not limited to the above-described embodiment, and appropriate modifications can be made without departing from the spirit of the present disclosure. For example, in the above-described embodiment, the configuration in which the vehicle lamp 600 is provided in the front portion of the vehicle M has been described as an example, but this is not a limitation. The vehicle lamp 600 may be configured to be provided in a rear portion or a side portion of the vehicle M, and may be configured to form the irradiation pattern on a road surface behind or beside the vehicle M.

Further, in the vehicle lamp 600 according to the above-described embodiment, the configuration in which the irradiation pattern P is formed on the road surface has been described as an example, but this is not a limitation. For example, the technology of the present disclosure can also be applied to the configuration in which the irradiation pattern is formed at a place other than the road surface in front of or behind the vehicle M.

In the vehicle lamp 600 according to the above-described embodiment, the case where the positioning portion 625 is formed by the second opening 623b formed in the light-blocking portion 623 has been described as an example, but this is not a limitation. The positioning portion 625 may have another configuration, for example, a configuration in which a corner of the light source-side lens 620 is cut out.

### DESCRIPTION OF REFERENCE NUMERALS

AX OPTICAL AXIS
C1 FIRST DIRECTION
C2 SECOND DIRECTION
D1, D2, D3, D4 DISTANCE
L LIGHT
M VEHICLE
P IRRADIATION PATTERN
Q REFERENCE POSITION
T CONVERGING ANGLE
10 LIGHT SOURCE UNIT
11 LIGHT SOURCE
11a LIGHT EMISSION SURFACE
12 SUBSTRATE
20, 20A, 20B, 20C, 20D, 20E CONDENSING LENS
20a, 41a INCIDENCE SURFACE
20b, 41b EMISSION SURFACE
21 META-SURFACE PORTION
22 PILLAR PORTION
23, 23B, 23C, 23D, 23E, 64, 73, 74, 75, 164 JOINING LAYER
24, 24B, 24C, 24D, 24E STRAY-LIGHT SUPPRESSION PORTION
25, 65 POSITIONING PORTION
25E, 43b, 63a, 65F, 71a, 161a, 532a, 532b, 553b OPENING
26D COATING LAYER
30 LIGHT-BLOCKING MEMBER
31 SLIT FORMING PORTION
32, 44 FRAME PORTION
32a, 46a POSITIONING OPENING
32b, 46b, 53b FIXING OPENING
33 SLIT
40 PROJECTING LENS
41 LENS PORTION
41a, 80a INCIDENCE SURFACE
41b, 80b EMISSION SURFACE
42 CYLINDRICAL PORTION
43, 532 PROJECTION
45 ANNULAR PORTION
46 BELT-SHAPED PORTION
46c, 46d CONTACT PORTION
50 SUPPORT MEMBER
51 BASE PORTION
51a SUPPORT SURFACE
52 FIN
53 FIXING PORTION
53a POSITIONING PROTRUSION
53c END SURFACE
54 SCREW MEMBER
60, 60F, 160, 260 FRAME MEMBER
62, 62F, 162, 262 WALL PORTION
63, 63F, 163, 263 SUPPORT PORTION
70 COVER MEMBER
71 SPACER
80 LIGHT SOURCE-SIDE LENS
81 META-SURFACE PORTION
81a REFERENCE REGION
81b, 81c PEAK POSITION
82 PILLAR PORTION
83 CENTRAL REGION
84, 85, 86 PERIPHERAL REGION
90 FIXING MEMBER
100, 200, 300, 400, 500, 600 VEHICLE LAMP
262a VENTILATION PORTION
553 FIXING PORTION
553a PROTRUSION
610 LIGHT SOURCE UNIT
611 LIGHT SOURCE
611a LIGHT EMISSION SURFACE
612 SUBSTRATE
612a MOUNTING SURFACE
612b CONNECTOR SURFACE
614 CONNECTOR
620 LIGHT SOURCE-SIDE LENS
620a, 631a INCIDENCE SURFACE
620b, 631b EMISSION SURFACE
621 META-SURFACE PORTION
622 PILLAR PORTION
623 LIGHT-BLOCKING PORTION
623a FIRST OPENING
623b SECOND OPENING
624 SLIT
625 POSITIONING PORTION
630 PROJECTING LENS
631 LENS PORTION
632 LEG PORTION
640 FRAME MEMBER
641 BASE PORTION
641a OPENING
641c VENTILATION PORTION
642 WALL PORTION
643 SUPPORT PORTION
644 JOINING LAYER

## Claims

1. A vehicle lamp (100) comprising:
a light source (11) that emits light (L);
a light source-side lens (80) that has a plate shape, includes a meta-surface portion (81) that converts a wavefront of the light (L) from the light source (11), and emits the light (L) with a converted wavefront;
a light-blocking member (30) including a slit (33) that allows a part of the light (L) emitted from the light source-side lens (80) to pass through; and
a projecting lens (40) that irradiates a road surface with the light (L) having passed through the slit (33) to form an irradiation pattern (P), wherein
the slit (33) is formed to have its longitudinal direction in one direction,
the meta-surface portion (81) includes a plurality of pillar portions (82) that is provided at a predetermined pitch in a first direction (C1) parallel to the longitudinal direction of the slit (33) and in a second direction (C2) perpendicular to the first direction (C1) with a reference position (Q) corresponding to an optical axis (AX) of the light source-side lens (80) as a center,
the meta-surface portion (81) includes a central region (83) that includes the reference position (Q) and includes a portion where diameters of the pillar portions (82) gradually decrease as a distance from the reference position (Q) increases, and
in the central region (83), changes in the diameters of the pillar portions (82) are more gradual on one side in the first direction (C1) with respect to the reference position (Q) than on the other side in the first direction (C1).

2. The vehicle lamp (100) according to claim 1, wherein, in the central region (83) of the meta-surface portion (81), changes in the diameters of the pillar portions (82) from the reference position (Q) are the same on one side in the second direction (C2) and on the other side in the second direction (C2).

3. The vehicle lamp (100) according to claim 1, wherein, in the central region (83) of the meta-surface portion (81), changes in the diameters of the pillar portions (82) on one side in the first direction (C1) from the reference position (Q) are more gradual than changes in the diameters of the pillar portions (82) on one side or the other side in the second direction (C2) from the reference position (Q).

4. The vehicle lamp (100) according to claim 1, wherein, in the central region (83) of the meta-surface portion (81), changes in the diameters of the pillar portions (82) on the other side in the first direction (C1) from the reference position (Q) are more rapid than changes in the diameters of the pillar portions (82) on one side or the other side in the second direction (C2) from the reference position (Q).

5. The vehicle lamp (100) according to claim 1, wherein, in the central region (83) of the meta-surface portion (81), a peak position (81b) where the diameter of the pillar portion (82) becomes the largest in the first direction (C1) is provided on one side with respect to the reference position (Q).

6. The vehicle lamp (100) according to claim 1, wherein, in the central region (83), the number of the pillar portions (82) in the first direction (C1) with reference to the reference position (Q) is larger than the number of the pillar portions (82) in the second direction (C2).

7. The vehicle lamp (100) according to claim 6, wherein, in the central region (83), the number of the pillar portions (82) provided on one side in the first direction (C1) from the reference position (Q) is larger by 20% or more than the number of the pillar portions (82) provided on each of one side and the other side in the second direction (C2) from the reference position (Q), and the number of the pillar portions (82) provided on the other side in the first direction (C1) from the reference position (Q) is smaller by 10% or more than the number of the pillar portions (82) provided on each of one side and the other side in the second direction (C2) from the reference position (Q).

8. The vehicle lamp (100) according to claim 1, wherein
in the meta-surface portion (81), a phase distribution is set such that phases periodically change in a radial direction along an incidence surface (80a) from a central portion including the reference position (Q),
the central region (83) is a region corresponding to a first period of the phase distribution including the reference position (Q),
the meta-surface portion (81) includes peripheral regions (84, 85, 86) that are provided in an annular shape to surround the central region (83) and that correspond to second and subsequent periods of the phase distribution, and
the peripheral regions (84, 85, 86) are formed such that diameters of the pillar portions (82) gradually decrease as a distance from the central region (83) increases along the incidence surface (80a).

9. The vehicle lamp (100) according to claim 8, wherein the peripheral regions (84, 85, 86) are in multiple layers provided in a direction outward away from the central region (83), and the number of peak positions (81c) where the diameter of the pillar portion (82) becomes the largest is larger on the other side than on one side in the first direction (C1).

10. A vehicle lamp comprising:
a light source that emits light;
a condensing lens that condenses the light emitted from the light source; and
a projecting lens that emits the light condensed by the condensing lens to form an irradiation pattern, wherein
the condensing lens has a flat plate shape having an incidence surface on which light is incident from the light source and an emission surface from which the light incident from the incidence surface is emitted and has, on the incidence surface, a meta-surface portion that converts a wavefront of the light from the light source into a curved wavefront in a converging direction, and
the vehicle lamp further comprises a stray-light suppression portion that blocks the light incident on a portion of the condensing lens other than the meta-surface portion.

11. The vehicle lamp according to claim 10, wherein the stray-light suppression portion is provided in the condensing lens.

12. The vehicle lamp according to claim 11, wherein the stray-light suppression portion is provided around the meta-surface portion on the incidence surface of the condensing lens.

13. The vehicle lamp according to claim 10, further comprising:
a light source substrate on which the light source is mounted; and
a frame member that is fixed to the light source substrate and supports the condensing lens, wherein
the condensing lens is joined to the frame member via a joining layer, and
the stray-light suppression portion includes at least a part of the joining layer.

14. The vehicle lamp according to claim 10, further comprising:
a cover member that supports the incidence surface of the condensing lens, covers the meta-surface portion, and allows light from the light source to pass through to the meta-surface portion side; and
a spacer provided between the cover member and the incidence surface, wherein
the stray-light suppression portion is provided in the spacer.

15. The vehicle lamp according to claim 10, further comprising a light-blocking member including a slit that allows a part of the light condensed by the condensing lens to pass through, wherein
the projecting lens irradiates a road surface with the light having passed through the slit to form the irradiation pattern, and
the stray-light suppression portion is provided between the light source and the light-blocking member.

16. A vehicle lamp comprising:
a light source that emits light;
a light source-side lens that includes an incidence surface on which light is incident from the light source, a meta-surface portion that is provided on the incidence surface and converts a wavefront of the light, an emission surface that emits the light with a converted wavefront, and a light-blocking portion that is provided on the emission surface and includes a slit that allows a part of the light to pass through; and
a projecting lens that emits the light having passed through the slit in the light source-side lens to form an irradiation pattern.

17. The vehicle lamp according to claim 16, wherein the light-blocking portion is formed in a thin film shape using a metallic material.

18. The vehicle lamp according to claim 17, wherein the light-blocking portion has a first opening forming the slit.

19. The vehicle lamp according to claim 17, further comprising:
a light source substrate on which the light source is mounted; and
a frame member fixed to the light source substrate, wherein
the light source-side lens is supported by the frame member, and
a positioning portion is provided in at least either the light source-side lens or the frame member.

20. The vehicle lamp according to claim 19, wherein the light-blocking portion has a second opening corresponding to the positioning portion.

21. The vehicle lamp according to claim 19, wherein
the light source substrate has a mounting surface on which the light source is mounted,
the frame member is fixed to the mounting surface, and
the vehicle lamp further comprises a connector that is provided on a surface opposite to the mounting surface of the light source substrate and is connected to the outside.

22. The vehicle lamp according to claim 16, wherein the number of the light source provided is one.

23. The vehicle lamp according to claim 16, wherein the meta-surface portion has a dimension in a lateral direction of the slit larger than a dimension of the slit and has a dimension in a longitudinal direction of the slit smaller than a dimension of the slit.
